# EUROPEAN PATENT APPLICATION

(11) **EP 4 527 889 A1**
(43) Date of publication of application: **26.03.2025**
(21) Application number: 23807378.7
(22) Date of filing: 20.04.2023
(51) Int. Cl.: C08L 53/00, B29C 45/14, B32B 27/30, B32B 27/32, C08F 293/00, C08J 5/00, C08L 23/12

(54) **THERMOPLASTIC ELASTOMER COMPOSITION FOR MULTILAYER MOLDING, MULTILAYER MOLDED BODY, AND MULTILAYER MOLDED BODY MANUFACTURING METHOD**

(30) Priority: 18.05.2022 JP 2022081255
(71) Applicant: Asahi Kasei Kabushiki Kaisha, Tokyo 1000006 (JP)
(72) Inventor: HISASUE, Takahiro, Tokyo 100-0006 (JP); DOBASHI, Mikako, Tokyo 100-0006 (JP); HORIUCHI, Mika, Tokyo 100-0006 (JP)
(74) Representative: Strehl & Partner mbB
(86) International application number: PCT/JP2023/015830
(87) International publication number: WO 2023/223766

(57) **Abstract**

A thermoplastic elastomer composition for double layer molding which is to be thermal fusion-bonded by injection molding, the thermoplastic elastomer composition for double layer molding containing 100 parts by mass of a hydrogenated block copolymer (a-1), 10 to 100 parts by mass of a polypropylene resin (b), and 50 to 300 parts by mass of a non-aromatic softener (c), and
further containing a hydrogenated block copolymer (a-2), both the hydrogenated block copolymers (a-1) and (a-2) being non-modified hydrogenated block copolymers, wherein a content of the hydrogenated block copolymer (a-2) is 5 to 70% by mass based on the total amount of the components (a-1), (a-2), (b), and (c), and the hydrogenated block copolymers (a-1) and (a-2) have their respective specific structures.

## Description

### Technical Field

The present invention relates to a thermoplastic elastomer composition for double layer molding, a double layer molded article, and a method for producing the double layer molded article.

### Background Art

Polar group-containing thermoplastic resins called engineering plastics have heretofore been used in many fields because of their excellent heat resistance and mechanical properties. The polar group-containing thermoplastic resins are used as, for example, base materials, and often used in double layer molded articles by bonding soft materials to superficial surfaces or a portion thereof. Examples thereof include automotive interior skins, grips, cushion materials, and sealing members such as packings.

The method for bonding a soft material to the base material of the polar group-containing thermoplastic resin is, for example, a bonding method using an adhesive or a bonding method based on thermal fusion bonding at the time of molding.

The method using an adhesive can firmly bond the soft material to the base material via the adhesive. However, this method requires a curing step in addition to the step of applying the adhesive and disadvantageously slows down a production speed.

On the other hand, examples of the bonding method based on thermal fusion bonding include a bonding method by injection molding such as insert molding and double injection molding. Such a bonding method by injection molding is capable of performing thermal fusion bonding at the same time with molding and is thus capable of drastically improving a production speed. In recent years, the bonding method based on thermal fusion bonding by injection molding has been increasingly practiced in recent years.

However, for the bonding method based on thermal bonding, the affinity of the soft material to be bonded to the base material of the polar group-containing thermoplastic resin is an important factor. In the case of using a non-polar composition as the soft material, this method disadvantageously weakens bonding strength. Hence, techniques related to a composition for thermal bonding containing a modifying component having a functional group as the soft material, or an adherent using the composition have been proposed for the purpose of improving bonding strength.

For example, Patent Document 1 discloses a thermoplastic elastomer composition containing a hydrogenated thermoplastic styrene elastomer, aa softener for hydrocarbon rubber, polypropylene, a thermoplastic polyurethane elastomer, and an acid-modified hydrogenated styrene elastomer.

Patent Document 2 discloses techniques related to a thermoplastic polymer composition containing a thermoplastic elastomer, a polyvinylacetal resin, and/or a polar group-containing polypropylene resin, and an adherent made of the thermoplastic polymer composition and an insert member.

### Citation List

### Patent Document

Patent Document 1: Japanese Patent Laid-Open No. 2009-209273
Patent Document 2: Japanese Patent Laid-Open No. 2014-168940

### Summary of Invention

### Technical Problem

The thermoplastic elastomer composition disclosed in Patent Document 1, however, contains a maleic anhydride-modified styrene elastomer as the acid-modified hydrogenated styrene elastomer and generates irritating odor at the time of thermal processing and also in a subsequent molded article. Hence, this composition is disadvantageously unsuitable for medical purposes or for purposes of use in space where persons stay for a long time, such as automotive interior materials or residential materials. Further problems of the composition are that: a modification step is added for acid modification; unreacted free maleic acid remains as impurities; and stain occurs due to an oligomer of maleic acid.

The thermoplastic polymer composition disclosed in Patent Document 2 contains a polyvinylacetal resin and/or a polar group-containing polypropylene resin. The polyvinylacetal resin easily loses its side chain at the time of thermal processing and generates strong odor through degradation reaction thereof, disadvantageously resulting in a poor working environment. The polar group-containing polypropylene resin, which has undergone acid modification with maleic anhydride, disadvantageously generates irritating odor, as in the thermoplastic elastomer composition disclosed in Patent Document 1.

As mentioned above, unfortunately, a composition for thermal bonding consisting of the conventionally proposed thermoplastic elastomer composition or thermoplastic polymer composition is susceptible to improvement in view of odor, stain, etc.

Accordingly, an object of the present invention is to provide a thermoplastic elastomer composition that has practically favorable odor and color and is excellent in moldability, thermal bonding strength, and mechanical strength, and a double layer molded article, in light of the problems of the conventional techniques mentioned above.

### Solution to Problem

The present inventors have conducted diligent studies to solve the problems of the conventional techniques mentioned above and found that a thermoplastic elastomer composition containing a hydrogenated block copolymer having a predetermined structure, a polypropylene resin, and a non-aromatic softener at a predetermined ratio can solve the problems of the conventional techniques mentioned above, consequently completing the present invention.

Specifically, the present invention is as follows:
[1] A thermoplastic elastomer composition for double layer molding which is to be thermal fusion-bonded by injection molding, the thermoplastic elastomer composition for double layer molding containing
   100 parts by mass of a hydrogenated block copolymer (a-1),
   10 to 100 parts by mass of a polypropylene resin (b), and
   50 to 300 parts by mass of a non-aromatic softener (c), and
   further containing a hydrogenated block copolymer (a-2), both the hydrogenated block copolymer (a-1) and the hydrogenated block copolymer (a-2) being non-modified hydrogenated block copolymers, wherein
   a content of the hydrogenated block copolymer (a-2) is 5 to 70% by mass based on the total amount of the components (a-1), (a-2), (b), and (c),
   the hydrogenated block copolymer (a-1) satisfies the following requirements (1-1) to (1-4), and
   the hydrogenated block copolymer (a-2) satisfies the following requirements (2-1) to (2-6):
      (1-1): one or more polymer blocks A1 composed mainly of a vinyl aromatic monomer unit, and one or more polymer blocks B1 composed mainly of a conjugated diene monomer unit are contained,
      (1-2): a content of all vinyl aromatic monomer units is 15% by mass or more and less than 35% by mass,
      (1-3): a weight-average molecular weight is 150,000 to 550,000, and
      (1-4): 50% by mol or more of double bonds in the conjugated diene monomer unit are hydrogenated,
      (2-1): one or more polymer blocks A2 composed mainly of a vinyl aromatic monomer unit, and one or more polymer blocks B2 composed mainly of a conjugated diene monomer unit are contained,
      (2-2): a content of the vinyl aromatic monomer unit in the polymer block A2 is 50% by mass or more,
      (2-3): a content of all vinyl aromatic monomer units is 35% by mass to 70% by mass,
      (2-4): a weight-average molecular weight is 30,000 or larger and smaller than 150,000,
      (2-5): a vinyl bond content before hydrogenation in the conjugated diene monomer unit in the polymer block B2 is 60% by mol to 95% by mol, and
      (2-6): 50% by mol or more of double bonds in the conjugated diene monomer unit are hydrogenated.
[2] The thermoplastic elastomer composition for double layer molding according to [1], wherein
   the hydrogenated block copolymer (a-2) has at least two polymer blocks A2 composed mainly of a vinyl aromatic monomer unit, and at least two polymer blocks B2 composed mainly of a conjugated diene monomer unit,
   at least one of the polymer blocks B2 is positioned at the end of the hydrogenated block copolymer (a-2), a content of the polymer block B2 positioned at the end is 1 to 10% by mass in the hydrogenated block copolymer (a-2), and
   the hydrogenated block copolymer (a-2) has no peak of a weight-average molecular weight of 250,000 or larger.
[3] The thermoplastic elastomer composition for double layer molding according to [1] or [2], wherein
   a content of the vinyl aromatic monomer unit in the polymer block A2 of the hydrogenated block copolymer (a-2) is 90% by mass or more.
[4] The thermoplastic elastomer composition for double layer molding according to any one of [1] to [3], wherein
   a content of all vinyl aromatic monomer units in the hydrogenated block copolymer (a-2) is more than 40% by mass and 70% by mass or less.
[5] The thermoplastic elastomer composition for double layer molding according to any one of [1] to [4], wherein
   in the hydrogenated block copolymer (a-1), a vinyl bond content before hydrogenation in the conjugated diene monomer unit is 30% by mol to 50% by mol.
[6] A double layer molded article having
   a layer of a thermoplastic elastomer composition for double layer molding according to any one of [1] to [5], and
   a polar group-containing thermoplastic resin layer.
[7] A double layer molded article having
   a polar group-containing thermoplastic resin layer, and
   a thermoplastic elastomer composition layer containing a hydrogenated block copolymer (a), a polypropylene resin (b), and a non-aromatic softener (c), wherein
   the thermoplastic elastomer composition layer is disposed in contact with the polar group-containing thermoplastic resin layer,
   the hydrogenated block copolymer (a) contains no modifying group,
   the hydrogenated block copolymer (a)
   is a hydrogenated block copolymer which is a hydrogenated product of a block copolymer having a vinyl aromatic monomer unit and a conjugated diene monomer unit, and
   has one or more molecular weight peaks each from 30,000 to smaller than 150,000 and from 150,000 to 550,000 in GPC,
   a content of all vinyl aromatic monomer units in a hydrogenated block copolymer having the molecular weight peaks from 30,000 to smaller than 150,000 in GPC is 35% by mass to 70% by mass, and a vinyl bond content before hydrogenation in the conjugated diene monomer unit is 60% by mol to 95% by mol,
   a content of all vinyl aromatic monomer units in a hydrogenated block copolymer having the molecular weight peaks from 150,000 to 550,000 in GPC is 15% by mass to less than 35% by mass, and
   a degree of hydrogenation of double bonds in the conjugated diene monomer unit is 50% by mol or more.
[8] The double layer molded article according to [7], wherein
   the hydrogenated block copolymer (a) consists of a hydrogenated block copolymer (a-1) and a hydrogenated block copolymer (a-2),
   the component (a-1) satisfies the following requirements (1-1) to (1-4),
   the component (a-2) satisfies the following requirements (2-1) to (2-6),
   the thermoplastic elastomer composition layer contains 100 parts by mass of the component (a-1), 10 to 100 parts by mass of the component (b), and 50 to 300 parts by mass of the component (c), and
   a content of the component (a-2) in the thermoplastic elastomer composition layer is 5 to 70% by mass based on the total amount of the components (a-1), (a-2), (b), and (c):
      (1-1): one or more polymer blocks A1 composed mainly of a vinyl aromatic monomer unit, and one or more polymer blocks B1 composed mainly of a conjugated diene monomer unit are contained,
      (1-2): a content of all vinyl aromatic monomer units is 15% by mass or more and less than 35% by mass,
      (1-3): a weight-average molecular weight is 150,000 to 550,000, and
      (1-4): 50% by mol or more of double bonds in the conjugated diene monomer unit are hydrogenated,
      (2-1): one or more polymer blocks A2 composed mainly of a vinyl aromatic monomer unit, and one or more polymer blocks B2 composed mainly of a conjugated diene monomer unit are contained,
      (2-2): a content of the vinyl aromatic monomer unit in the polymer block A2 is 50% by mass or more,
      (2-3): a content of all vinyl aromatic monomer units is 35% by mass to 70% by mass,
      (2-4): a weight-average molecular weight is 30,000 or larger and smaller than 150,000,
      (2-5): a vinyl bond content before hydrogenation in the conjugated diene monomer unit in the polymer block B2 is 60% by mol to 95% by mol, and
      (2-6): 50% by mol or more of double bonds in the conjugated diene monomer unit are hydrogenated.
[9] The double layer molded article according to [8], wherein
   the hydrogenated block copolymer (a-2) has at least two polymer blocks A2 composed mainly of a vinyl aromatic monomer unit, and at least two polymer blocks B2 composed mainly of a conjugated diene monomer unit, at least one of the polymer blocks B2 is positioned at the end of the hydrogenated block copolymer (a-2), a content of the polymer block B2 positioned at the end is 1 to 10% by mass in the hydrogenated block copolymer (a-2),
   a content of all vinyl aromatic monomer units is more than 40% by mass and 70% by mass or less, and
   the hydrogenated block copolymer (a-2) has no peak of a weight-average molecular weight of 250,000 or larger.
[10] The double layer molded article according to [8] or [9], wherein
   a content of the vinyl aromatic monomer unit in the polymer block A2 of the hydrogenated block copolymer (a-2) is 90% by mass or more.
[11] The double layer molded article according to any one of [6] to [10], wherein
   the polar group-containing thermoplastic resin is at least one member selected from the group consisting of a polycarbonate resin, an ABS resin, a polyester resin, an acrylic resin, and a mixture thereof.
[12] The double layer molded article according to any one of [8] to [11], wherein
   in the hydrogenated block copolymer (a-1),
   a vinyl bond content before hydrogenation in the conjugated diene monomer unit is 30% by mol to 50% by mol.
[13] A thermoplastic elastomer composition for use in a double layer molded article according to any one of [6] to [12], wherein
   the double layer molded article contains the polar group-containing thermoplastic resin layer and the thermoplastic elastomer composition layer, thermal fusion-bonded to each other by injection molding.
[14] A method for producing a double layer molded article according to any one of [6] to [13], containing the steps of:
   molding the polar group-containing thermoplastic resin to obtain a molded article; and
   injecting a thermoplastic elastomer composition according to [13] to a gap part between the mold and the molded article in a state in which the molded article is placed in the mold, followed by thermal fusion bonding.

### Advantageous Effects of Invention

According to the present invention, a thermoplastic elastomer composition that has practically favorable odor and color and is excellent in moldability, thermal bonding strength, and mechanical strength, and a double layer molded article can be obtained.

### Description of Embodiments

Hereinafter, the mode for carrying out the present invention (hereinafter, referred to as the "present embodiment") will be described in detail.

The present embodiment described below is given for illustrating the present invention and does not limit the present invention to the contents described below. The present invention can be carried out through various changes or modifications without departing from the spirit of the present invention.

### [Thermoplastic elastomer composition]

The thermoplastic elastomer composition of the present embodiment is a thermoplastic elastomer composition for double layer molding which is to be thermal fusion-bonded to another member by injection molding, the thermoplastic elastomer composition for double layer molding containing
100 parts by mass of a hydrogenated block copolymer (a-1),
10 to 100 parts by mass of a polypropylene resin (b), and
50 to 300 parts by mass of a non-aromatic softener (c), and
further containing a hydrogenated block copolymer (a-2), both the hydrogenated block copolymer (a-1) and the hydrogenated block copolymer (a-2) being non-modified hydrogenated block copolymers.

A content of the hydrogenated block copolymer (a-2) is 5 to 70% by mass based on the total amount of the components (a-1), (a-2), (b), and (c).

The hydrogenated block copolymer (a-1) satisfies the following requirements (1-1) to (1-4), and the hydrogenated block copolymer (a-2) satisfies the following requirements (2-1) to (2-6):
(1-1): one or more polymer blocks A1 composed mainly of a vinyl aromatic monomer unit, and one or more polymer blocks B1 composed mainly of a conjugated diene monomer unit are contained,
(1-2): a content of all vinyl aromatic monomer units is 15% by mass or more and less than 35% by mass,
(1-3): a weight-average molecular weight is 150,000 to 550,000, and
(1-4): 50% by mol or more of double bonds in the conjugated diene monomer unit are hydrogenated,
(2-1): one or more polymer blocks A2 composed mainly of a vinyl aromatic monomer unit, and one or more polymer blocks B2 composed mainly of a conjugated diene monomer unit are contained,
(2-2): a content of the vinyl aromatic monomer unit in the polymer block A2 is 50% by mass or more,
(2-3): a content of all vinyl aromatic monomer units is 35% by mass to 70% by mass,
(2-4): a weight-average molecular weight is 30,000 or larger and smaller than 150,000,
(2-5): a vinyl bond content before hydrogenation in the conjugated diene monomer unit in the polymer block B2 is 60% by mol to 95% by mol, and
(2-6): 50% by mol or more of double bonds in the conjugated diene monomer unit are hydrogenated.

The thermoplastic elastomer composition has the configuration described above and thereby has practically favorable odor and color and is excellent in moldability, thermal bonding strength, and mechanical strength.

Hereinafter, each component will be described in detail.

### (Hydrogenated block copolymer (a-1))

The thermoplastic elastomer composition of the present embodiment contains a hydrogenated block copolymer (a-1).

The hydrogenated block copolymer (a-1) is a hydrogenated block copolymer obtained by hydrogenating a block copolymer containing one or more polymer blocks A1 composed mainly of a vinyl aromatic monomer unit, and one or more polymer blocks B1 composed mainly of a conjugated diene monomer unit (the requirement (1-1)).

The hydrogenated block copolymer (a-1) is a so-called "non-modified" copolymer having no functional group derived from neither a vinyl aromatic compound nor a conjugated diene compound. Such a non-modified copolymer is free from contamination with impurities resulting from unreacted products and generates less odor.

The term "non-modified" excludes the case where the hydrogenated block copolymer (a-1) contains a modifying group formed by a predetermined modifying agent. The requirement to be "non-modified" is satisfied by the case where the hydrogenated block copolymer (a-1), when obtained through coupling reaction with a coupling agent, has a Si atom or an O atom derived from the coupling agent.

As mentioned above, in the present embodiment, an atomic group having a heteroatom differentiates between being present as a coupling agent residue and being introduced by a modifying agent. This background is probably influenced by a coupling agent residue which tends to be positioned at a central part of a polymer, whereas a modifying agent tends to be introduced to the end or a side chain of a copolymer. For providing a thermoplastic elastomer composition having practically favorable odor and color, it is desirable to liberate less functional groups. A residue introduced as a coupling agent to the center tends to be unlikely to liberate a functional group because the end of a polymer chain is bonded to the functional group through coupling reaction and/or because of steric hindrance ascribable to a copolymer chain. By contrast, a modifying agent, when reacted with the end or a side chain of a copolymer, easily liberates a functional group, which tends to be responsible for odor or color. Particularly, in the case of a so-called secondary modified product obtained by mixing and reacting a copolymer with a modifying agent in an extruder, a modifying group is often introduced with maleic anhydride, epoxy, or the like. In this case, a carboxyl group-containing compound or an epoxy group-containing compound is easily eliminated and tends to be responsible for odor or color. In the case of coupling reaction at the end where polymerization is completed, unreacted products may be almost completely removed in a subsequent copolymer finishing step such as desolvation. By contrast, the secondary modified product is difficult to remove completely and tends to leave a lot of unreacted residues. In this respect as well, the secondary modified product easily influences odor or color.

Although conventional modification is performed for the purpose of improving bondability to another component, the present inventors have conceived the idea of designing the structure of a hydrogenated block copolymer, albeit non-modified, such that favorable bondability can be ensured. Mainly, the structure of the hydrogenated block copolymer (a-2) mentioned later is effective for thermal fusion bonding to another member in double layer molding.

The modifying group of the hydrogenated block copolymer can be confirmed by NMR analysis or IR analysis.

The polymer block A1 composed mainly of a vinyl aromatic monomer unit means that the content of the vinyl aromatic monomer unit in the polymer block A1 exceeds 50% by mass. The content is preferably 60% by mass or more, more preferably 70% by mass or more, further preferably 80% by mass or more, still further preferably 90% by mass or more, in view of mechanical strength and thermal deformation resistance.

Likewise, the polymer block B1 composed mainly of a conjugated diene monomer unit means that the content of the conjugated diene monomer unit in the polymer block B1 exceeds 50% by mass. The content is preferably 60% by mass or more, more preferably 70% by mass or more, further preferably 80% by mass or more, still further preferably 90% by mass or more, in view of flexibility and softener retention properties.

In the present embodiment, each monomer unit constituting a block copolymer is designated according to the designation of the monomer from which the monomer unit is derived. For example, the "vinyl aromatic monomer unit" means a constitutional unit of a polymer resulting from the polymerization of a vinyl aromatic compound serving as a monomer, and its structure is a molecular structure where two carbon atoms of an ethylene substituent group derived from a vinyl substituent group are binding sites.

Also, the "conjugated diene monomer unit" means a constitutional unit of a polymer resulting from the polymerization of a conjugated diene compound serving as a monomer, and its structure is a molecular structure where two carbon atoms of an olefin derived from the conjugated diene compound are binding sites.

In the present embodiment, the vinyl aromatic compound that can be used for forming the vinyl aromatic monomer unit in the polymer block A1 refers to a compound having a vinyl group and an aromatic ring.

Examples of the vinyl aromatic compound include, but are not limited to, styrene, α-methylstyrene, p-methylstyrene, divinylbenzene, 1,1-diphenylethylene, N,N-dimethyl-p-aminoethylstyrene, and N,N-diethyl-p-aminoethylstyrene. Among them, styrene, α-methylstyrene, or divinylbenzene is suitably used in view of polymerizability. These vinyl aromatic compounds may be used singly, or two or more thereof may be used in combination.

The conjugated diene compound that can be used for forming the conjugated diene monomer unit in the polymer block B1 is a diolefin having one pair of conjugated double bonds (two double bonds bonded so as to be conjugated) .

Examples of the conjugated diene compound include, but are not limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. Among them, 1,3-butadiene or 2-methyl-1,3-butadiene

(isoprene) is suitably used in view of polymerizability. These conjugated diene compounds may be used singly or two or more thereof may be used in combination.

The hydrogenated block copolymer (a-1) has, for example, but not limited to, a structure as represented by the general formulas (1) to (7) given below. Alternatively, the hydrogenated block copolymer (a-1) may be a mixture containing plural types of copolymers having a structure as represented by the general formulas (1) to (7) given below at an arbitrary ratio.

(A1-B1)ₙ (1)

A1-(B1-A1)ₙ (2)

B1-(A1-B1)ₙ (3)

[(B1-A1)ₙ]ₘ-Z (4)

[(A1-B1)ₙ]ₘ-Z (5)

[(B1-A1)ₙ-B1]ₘ-Z (6)

[(A1-B1)ₙ-A1]ₘ-Z (7)

In the general formulas (1) to (7), A1 is a polymer block composed mainly of a vinyl aromatic monomer unit, and B1 is a polymer block composed mainly of a conjugated diene monomer unit. The boundary between the polymer block A1 and the polymer block B1 is not necessarily required to be clearly defined.

n is an integer of 1 or larger and is preferably an integer of 1 to 5.

m is an integer of 2 or larger and is preferably an integer of 2 to 11, more preferably 2 to 8.

Z represents a residue of a coupling agent. In this context, the residue of a coupling agent means a residue after coupling by a coupling agent for use in coupling a plurality of copolymers of conjugated diene monomer units and vinyl aromatic monomer units between the polymer block A1 and the polymer block A1, between the polymer block B1 and the polymer block B1, or between the polymer block A1 and the polymer block B1. Examples of the coupling agent include, but are not limited to, silicon halide compounds and acid esters mentioned later.

In the general formulas (1) to (7), the vinyl aromatic monomer units in the polymer block A1 and the polymer block B1 may be uniformly distributed or may be distributed in a tapered pattern.

When the polymer block A1 and the polymer block B1 form a copolymer block of vinyl aromatic monomer units and conjugated diene monomer units, the vinyl aromatic monomer units in the copolymer block may include a plurality of uniformly distributed moieties and/or a plurality of tapered distributed moieties. The copolymer block moiety may contain a plurality of moieties differing in vinyl aromatic monomer unit content.

The content of all vinyl aromatic monomer units in the hydrogenated block copolymer (a-1) is 15% by mass or more and less than 35% by mass (the requirement (1-2)).

The content is preferably 17% by mass or more, more preferably 19% by mass or more, further preferably 21% by mass or more, still further preferably 23% by mass or more, in view of mechanical strength, flexibility, recovery properties, and rebound resilience of the thermoplastic elastomer composition of the present embodiment.

The content is preferably 34% by mass or less, more preferably 33% by mass or less.

Mechanical strength and recovery properties are necessary characteristics for material strength or prevention of deformation, and flexibility and rebound resilience are characteristics related to texture. Therefore, for use of the thermoplastic elastomer composition of the present embodiment in grips, skin materials, or sealing materials, it is preferred to design the content of all vinyl aromatic monomer units in the hydrogenated block copolymer (a-1) within a range suitable for these purposes.

When the content of all vinyl aromatic monomer units in the hydrogenated block copolymer (a-1) is 15% by mass or more, the mechanical strength and thermal deformation resistance of the thermoplastic elastomer composition of the present embodiment tend to be improved. When the content of all vinyl aromatic monomer units is less than 35% by mass, the flexibility, recovery properties, and rebound resilience of the thermoplastic elastomer composition of the present embodiment tend to be improved. The content of all vinyl aromatic monomer units can be controlled to the numeric range described above by adjusting the amounts of monomers added in a polymerization step for the hydrogenated block copolymer (a-1), and can be calculated from absorption intensity at 262 nm by a method described in Examples mentioned later using an ultraviolet spectrophotometer.

The weight-average molecular weight of the hydrogenated block copolymer (a-1) is 150,000 to 550,000 (the requirement (1-3)). The weight-average molecular weight is 150,000 or larger, preferably 170,000 or larger, more preferably 190,000 or larger, further preferably 210,000 or larger, in view of thermal deformation resistance. The weight-average molecular weight is preferably 500,000 or smaller, more preferably 450,000 or smaller, further preferably 400,000 or smaller, still further preferably 350,000 or smaller, even further preferably 300,000 or smaller.

When the weight-average molecular weight of the hydrogenated block copolymer (a-1) is 150,000 or larger, the thermoplastic elastomer composition of the present embodiment tends to have favorable thermal deformation resistance and recovery properties. When the weight-average molecular weight of the hydrogenated block copolymer (a-1) is 550,000 or smaller, the thermoplastic elastomer composition of the present embodiment exhibits favorable fluidity and sufficient molding processability is obtained.

The molecular weight distribution (Mw/Mn) of the hydrogenated block copolymer (a-1) is preferably 1.01 to 5.0, more preferably 1.01 to 4.0, further preferably 1.01 to 3.0.

When the molecular weight distribution of the hydrogenated block copolymer (a-1) is 1.01 to 5.0, more favorable mechanical strength tends to be obtained.

The shape of the molecular weight distribution curve of the hydrogenated block copolymer (a-1) measured by gel permeation chromatography (hereinafter, also referred to as GPC) is not particularly limited and may have a polymodal molecular weight distribution with two or more peaks or may have a monomodal molecular weight distribution with one peak.

The weight-average molecular weight (Mw) and molecular weight distribution [Mw/Mn; the ratio of the weight-average molecular weight (Mw) to the number-average molecular weight (Mn)] of the hydrogenated block copolymer (a-1) can be determined by a method described in Examples mentioned later on the basis of the molecular weight of a chromatogram peak in gel permeation chromatography (GPC) measurement using a calibration curve determined from the measurement of commercially available standard polystyrene (created by using the peak molecular weight of standard polystyrene).

The microstructure (cis, trans, and vinyl bond contents) of the polymer block B1 in the hydrogenated block copolymer (a-1) can be arbitrarily controlled by use of an adjuster such as a polar compound in a polymerization step for the hydrogenated block copolymer (a-1).

The adjuster will be mentioned later.

The vinyl bond content before hydrogenation of the conjugated diene monomer unit in the hydrogenated block copolymer (a-1) is preferably 30% by mol or more, more preferably 31% by mol or more, further preferably 31% by mol or more, still further preferably 32% by mol or more. The upper limit is preferably 50% by mol or less, more preferably 47% by mol or less, further preferably 44% by mol or less.

When the vinyl bond content before hydrogenation in the conjugated diene monomer unit in the hydrogenated block copolymer (a-1) is 30% by mol or more, the compatibility of the hydrogenated block copolymer (a-1) with the polypropylene resin (b) mentioned later tends to be further improved. When the vinyl bond content before hydrogenation in the conjugated diene monomer unit is 50% by mol or less, the mechanical strength of the thermoplastic elastomer composition of the present embodiment tends to be further improved.

In the present specification, the vinyl bond content "before hydrogenation" is described because the term "vinyl bond" is no longer appropriate after hydrogenation. This term does not intend to mean that the content must be measured in a copolymer before hydrogenation. Since the form of the conjugated diene attached is also determined from a structure after hydrogenation, the vinyl bond content "before hydrogenation" may be calculated by examining the structure after hydrogenation.

In the present embodiment, the vinyl bond content is the ratio of the total molar amount of pre-hydrogenated conjugated diene monomer units attached by 1,2 bonds and 3,4-bonds with respect to the total molar amount of those attached by 1,2-bonds, 3,4-bonds, and 1,4-bonds, for example, in butadiene.

After hydrogenation, the ratio of the total molar amount of conjugated diene monomer units attached by unhydrogenated 1,2-bonds, hydrogenated 1,2-bonds, unhydrogenated 3,4-bonds and hydrogenated 3,4-bonds to the total molar amount of those attached by unhydrogenated 1,2-bonds, hydrogenated 1,2-bonds, unhydrogenated 3,4-bonds, hydrogenated 3,4-bonds, unhydrogenated 1,4-bonds and hydrogenated 1,4-bonds is equal to the vinyl bond content of pre-hydrogenated conjugated diene monomer units. Thus, the vinyl bond content of pre-hydrogenated conjugated diene monomer units can be measured by nuclear magnetic resonance spectrometry (NMR) using the block copolymer after hydrogenation and can be specifically measured by a method described in Examples mentioned later.

The degree of hydrogenation of aliphatic double bonds derived from the conjugated diene compound, i.e., double bonds of the conjugated diene monomer unit, in the hydrogenated block copolymer (a-1) is 50% or more (the requirement (1-4), preferably 60% or more, more preferably 70% or more. When the degree of hydrogenation is 50% or more, there is a tendency that reduction in mechanical properties ascribable to thermal deterioration (oxidative deterioration) can be more effectively suppressed in the thermoplastic elastomer composition of the present embodiment. When the degree of hydrogenation is 70% or more, there is a tendency that better weather resistance is obtained in the thermoplastic elastomer composition of the present embodiment. The upper limit value of the degree of hydrogenation is not particularly limited and is preferably 100% or less, more preferably 99% or less.

The degree of hydrogenation of double bonds in the conjugated diene monomer unit of the hydrogenated block copolymer (a-1) may be controlled to the numeric range described above by adjusting the type of a hydrogenation catalyst, the amount of the hydrogenation catalyst used, and hydrogenation conditions, and can be measured by a method described in Examples mentioned later.

The thermoplastic elastomer composition of the present embodiment may be blended with an organic peroxide (e) mentioned later and thereby partially cross-linked in the step of melt-kneading the thermoplastic elastomer composition in an extruder. A thermoplastic elastomer composition layer constituting the double layer molded article of the present embodiment mentioned later is not necessarily required to be cross-linked and may be cross-linked for purposes that highly require suppressing permanent distortion. In the case of partially cross-linking the thermoplastic elastomer composition of the present embodiment using the organic peroxide (e), the degree of hydrogenation of aliphatic double bonds derived from the conjugated diene compound in the hydrogenated block copolymer (a-1) needs to be 50% or more and is preferably 60% or more, in view of heat resistance, and is preferably 90% or less, more preferably 85% or less, in view of processability and cross-linking reactivity.

The degree of hydrogenation of aromatic double bonds based on the vinyl aromatic monomer unit in the hydrogenated block copolymer (a-1) is not particularly limited and is preferably 50% or less, more preferably 30% or less, further preferably 20% or less.

### (Hydrogenated block copolymer (a-2))

The thermoplastic elastomer composition of the present embodiment contains a hydrogenated block copolymer (a-2).

The hydrogenated block copolymer (a-2) is a hydrogenated block copolymer obtained by hydrogenating a block copolymer containing one or more polymer blocks A2 composed mainly of a vinyl aromatic monomer unit, and one or more polymer blocks B2 composed mainly of a conjugated diene monomer unit (the requirement (2-1)).

The content of all vinyl aromatic monomer units in the hydrogenated block copolymer (a-2) is 35% by mass to 70% by mass (the requirement (2-3)). The weight-average molecular weight of the hydrogenated block copolymer (a-2) is 30,000 or larger and smaller than 150,000 (the requirement (2-4)). The vinyl bond content before hydrogenation in the conjugated diene monomer unit in the polymer block B2 is 60% by mol to 95% by mol (the requirement (2-5)).

The hydrogenated block copolymer (a-2) is a non-modified block copolymer having no functional group derived from neither a vinyl aromatic compound nor a conjugated diene compound. Such a non-modified hydrogenated block copolymer (a-2) produces a thermoplastic elastomer composition free from odor, color, and contamination with impurities resulting from unreacted products.

The term "non-modified" excludes the case where the hydrogenated block copolymer (a-2) contains a modifying group formed by a predetermined modifying agent. The requirement to be "non-modified" is satisfied by the case where the hydrogenated block copolymer (a-2), when obtained through coupling reaction with a coupling agent, has a Si atom or an O atom derived from the coupling agent.

The thermoplastic elastomer composition of the present embodiment contains the hydrogenated block copolymer (a-2) having a specific structure that satisfies the requirements (2-1) to (2-6), and thereby becomes capable of being thermally bonded to a polar group-containing thermoplastic resin mentioned later without the use of a modified copolymer.

The thermoplastic elastomer composition of the present embodiment contains a polypropylene resin (b) for moldability and hardness adjustment. However, the polypropylene resin (b) has low affinity for a polar group-containing thermoplastic resin composition and thus rarely exerts bonding strength in thermal bonding to a polar group-containing thermoplastic resin mentioned later.

There is a tendency that the thermal bondability of the thermoplastic elastomer composition of the present embodiment can be controlled by the amounts of the vinyl aromatic monomer units and the vinyl bond contents in the hydrogenated block copolymers (a-1) and (a-2). The content of the vinyl aromatic monomer in the hydrogenated block copolymer (a-2) is 35% by mass to 70% by mass (the requirement (2-3)). For example, a higher amount of styrene in the hydrogenated block copolymer or a higher content of the component (a-2) in the thermoplastic elastomer composition of the present embodiment tends to improve affinity for a polar group-containing thermoplastic resin mentioned later and enhance bonding strength.

In the hydrogenated block copolymer (a-2), the vinyl bond content before hydrogenation in the conjugated diene monomer unit in the polymer block B2 is 60% by mol to 95% by mol (the requirement (2-5)). A higher vinyl bond content within this range or a higher ratio of the component (a-2) if the vinyl bond content is the same can improve compatibility with the polypropylene resin (b) and compensate for low affinity for a polar group-containing thermoplastic resin, which is a disadvantage of the polypropylene resin (b), through fine dispersion. Specifically, synergistic effects thereof improve the thermal bondability of the thermoplastic elastomer composition of the present embodiment to a polar group-containing thermoplastic resin.

The thermoplastic elastomer composition of the present embodiment contains one or more polypropylene resins (b) and one or more non-aromatic softeners (c) in addition to the hydrogenated block copolymer (a-1) and the hydrogenated block copolymer (a-2) mentioned above in view of improvement in balance among mechanical strength, flexibility, recovery properties, moldability, and thermal bondability. Furthermore, the content of the hydrogenated block copolymer (a-2) is 5 to 70% by mass based on the total amount of the components (a-1), (a-2), (b), and (c). The lower limit value is preferably 10% by mass or more, more preferably 15% by mass or more. The upper limit value is preferably 65% by mass or less, more preferably 60% by mass or less.

In the hydrogenated block copolymer (a-2), the content of the vinyl aromatic monomer unit in the polymer block A2 composed mainly of a vinyl aromatic monomer unit is 50% by mass or more (the requirement (2-2)) and is preferably 60% by mass or more, more preferably 70% by mass or more, further preferably 80% by mass or more, still further preferably 90% by mass or more, in view of the thermal fusion bondability of the thermoplastic elastomer composition of the present embodiment to a polar group-containing thermoplastic resin mentioned later.

In the hydrogenated block copolymer (a-2), the polymer block B2 composed mainly of a conjugated diene monomer unit means that the content of the conjugated diene monomer unit in the polymer block B2 exceeds 50% by mass. The content is preferably 60% by mass or more, more preferably 70% by mass or more, further preferably 80% by mass or more, still further preferably 90% by mass or more.

The vinyl aromatic compound that is used for forming the vinyl aromatic monomer unit in the polymer block A2 refers to a compound having a vinyl group and an aromatic ring. Examples of the vinyl aromatic compound include, but are not limited to, styrene, α-methylstyrene, p-methylstyrene, divinylbenzene, 1,1-diphenylethylene, N,N-dimethyl-p-aminoethylstyrene, and N,N-diethyl-p-aminoethylstyrene. Among them, styrene, α-methylstyrene, or divinylbenzene is suitably used in view of polymerizability. These vinyl aromatic compounds may be used singly, or two or more thereof may be used in combination.

The conjugated diene compound that is used for forming the conjugated diene monomer unit in the polymer block B2 is a diolefin having one pair of conjugated double bonds (two double bonds bonded so as to be conjugated). Examples of the conjugated diene compound include, but are not limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. Among them, 1,3-butadiene or 2-methyl-1,3-butadiene (isoprene) is suitably used in view of polymerizability. These conjugated diene compounds may be used singly, or two or more thereof may be used in combination.

The hydrogenated block copolymer (a-2) has, for example, but not limited to, a structure as represented by the general formulas (8) to (14) given below. Alternatively, the hydrogenated block copolymer (a-2) may be a mixture containing plural types of structures as represented by the general formulas (8) to (14) given below at an arbitrary ratio.

(A2-B2)ₙ (8)

A2-(B2-A2)ₙ (9)

B2-(A2-B2)ₙ (10)

[(B2-A2)ₙ]ₘ-Z (11)

[(A2-B2)ₙ]ₘ-Z (12)

[(B2-A2)ₙ-B2]ₘ-Z (13)

[(A2-B2)ₙ-A2]ₘ-Z (14)

In the general formulas (8) to (14), A2 is a polymer block composed mainly of a vinyl aromatic monomer unit, and B2 is a polymer block composed mainly of a conjugated diene monomer unit. The boundary between the polymer block A2 and the polymer block B2 is not necessarily required to be clearly defined.

n is an integer of 1 or larger and is preferably an integer of 1 to 5.

m is an integer of 2 or larger and is preferably an integer of 2 to 11, more preferably 2 to 8.

Z represents a residue of a coupling agent. In this context, the residue of a coupling agent means a residue after coupling by a coupling agent for use in coupling a plurality of copolymers of conjugated diene monomer units and vinyl aromatic monomer units between the polymer block A2 and the polymer block A2, between the polymer block B2 and the polymer block B2, or between the polymer block A2 and the polymer block B2. Examples of the coupling agent include, but are not limited to, silicon halide compounds and acid esters mentioned later.

The structural formula of the hydrogenated block copolymer (a-2) is preferably the formula (8), (9), or (10), more preferably the formula (8) or (10), further preferably the formula (8).

In the general formulas (8) to (14), the vinyl aromatic monomer units in the polymer block A2 and the polymer block B2 may be uniformly distributed or may be distributed in a tapered pattern. When the polymer block A2 and the polymer block B2 form a copolymer block of vinyl aromatic monomer units and conjugated diene monomer units, the vinyl aromatic monomer units in the copolymer block may include a plurality of uniformly distributed moieties and/or a plurality of tapered distributed moieties. The copolymer block moiety may contain a plurality of moieties differing in vinyl aromatic monomer unit content.

As mentioned above, the content of all vinyl aromatic monomer units in the hydrogenated block copolymer (a-2) is 35% by mass to 70% by mass (the requirement (2-3)). The content is preferably 37 to 70% by mass, more preferably 40 to 70% by mass, further preferably more than 40% by mass to 70% by mass, still further preferably more than 40% by mass to 68% by mass, even further preferably more than 40% by mass to 66% by mass.

When the content of all vinyl aromatic monomer units in the hydrogenated block copolymer (a-2) is 35% by mass or more, the mechanical strength of the thermoplastic elastomer composition of the present embodiment and its affinity for a polar group-containing thermoplastic resin mentioned later are improved and sufficient thermal bonding strength tends to be obtained. When the content of all vinyl aromatic monomer units in the hydrogenated block copolymer (a-2) is 70% by mass or less, the flexibility and recovery properties of the thermoplastic elastomer composition of the present embodiment tend to be further improved.

The content of all vinyl aromatic monomer units in the hydrogenated block copolymer (a-2) can be controlled to the numeric range described above by adjusting the amounts of monomers added in a polymerization step for the hydrogenated block copolymer (a-2), and can be calculated from absorption intensity at a wavelength of 262 nm by a method described in Examples mentioned later using an ultraviolet spectrophotometer.

The weight-average molecular weight of the hydrogenated block copolymer (a-2) is 30,000 or larger and smaller than 150,000 (the requirement (2-4)).

When the weight-average molecular weight of the hydrogenated block copolymer (a-2) is 30,000 or larger, the thermal deformation resistance and recovery properties of the thermoplastic elastomer composition of the present embodiment tend to be improved. When the weight-average molecular weight of the hydrogenated block copolymer (a-2) is smaller than 150,000, the fluidity of the thermoplastic elastomer composition of the present embodiment is improved and the moldability and thermal bondability of the thermoplastic elastomer composition of the present embodiment tend to be improved. From a similar viewpoint, the weight-average molecular weight of the hydrogenated block copolymer (a-2) is preferably 40,000 to 130,000, more preferably 50,000 to 110,000.

The molecular weight distribution (Mw/Mn) of the hydrogenated block copolymer (a-2) is preferably 1.01 to 8.0, more preferably 1.01 to 6.0, further preferably 1.01 to 5.0. When the molecular weight distribution of the hydrogenated block copolymer (a-2) falls within the range described above, the thermoplastic elastomer composition of the present embodiment tends to obtain more favorable recovery properties. Mw and Mn of the hydrogenated block copolymer (a-2) can be measured by GPC and can specifically be measured by a method described in Examples mentioned later.

The shape of the molecular weight distribution curve of the hydrogenated block copolymer (a-2) is not particularly limited and may have a polymodal molecular weight distribution with two or more peaks or may have a monomodal molecular weight distribution with one peak.

In the hydrogenated block copolymer (a-2), the vinyl bond content before hydrogenation in the conjugated diene monomer unit in the polymer block B2 is 60% by mol to 95% by mol (the requirement (2-5)). The vinyl bond content is preferably 63% by mol to 90% by mol, more preferably 65% by mol to 85% by mol.

When the vinyl bond content before hydrogenation in the conjugated diene monomer unit in the polymer block B2 of the hydrogenated block copolymer (a-2) is 60% by mol or more, compatibility with the polypropylene resin (b) mentioned later tends to be improved and the thermoplastic elastomer composition of the present embodiment tends to have favorable thermal bondability. When the hydrogenated block copolymer (a-2) has a relatively small molecular weight and further the vinyl bond content is as high as 60% by mol or more, the fluidity of the thermoplastic elastomer composition of the present embodiment is improved, wettability following fine irregularities of adherend surface is favorable, and the thermoplastic elastomer composition of the present embodiment tends to have favorable thermal bondability.

When the vinyl bond content before hydrogenation in the conjugated diene monomer unit is 95% by mol or less, there is a tendency that the mechanical strength of the thermoplastic elastomer composition of the present embodiment can be ensured.

The vinyl bond content of the conjugated diene monomer unit can be measured by nuclear magnetic resonance spectrometry (NMR) using the block copolymer and can specifically be measured by a method described in Examples mentioned later.

The vinyl bond content can be controlled to the numeric range mentioned above by adjusting the type of an adjuster such as a tertiary amine mentioned later and the amount of the adjuster added.

As mentioned above, the content of all vinyl aromatic monomer units in the hydrogenated block copolymer (a-2) is 35% by mass to 70% by mass (the requirement (2-3)) in view of the thermal bonding strength of the thermoplastic elastomer composition of the present embodiment and the flexibility and recovery properties of the thermoplastic elastomer composition, and the vinyl bond content before hydrogenation in the conjugated diene monomer unit is 60% by mol to 95% by mol (the requirement (2-5)) in view of the thermal bondability and mechanical strength of the thermoplastic elastomer composition of the present embodiment.

The degree of hydrogenation of double bonds in the conjugated diene monomer unit in the hydrogenated block copolymer (a-2) is 50% by mol or more (the requirement (2-6)), preferably 80% or more, more preferably 90% or more. When the degree of hydrogenation of double bonds in the conjugated diene monomer unit in the hydrogenated block copolymer (a-2) is 50% by mol or more, reduction in mechanical properties ascribable to thermal deterioration, i.e., oxidative deterioration, can be suppressed in the thermoplastic elastomer composition of the present embodiment. The upper limit value of the degree of hydrogenation is not particularly limited and is preferably 100% or less, more preferably 99% or less.

The degree of hydrogenation of double bonds in the conjugated diene monomer unit of the hydrogenated block copolymer (a-2) may be controlled to the numeric range described above by adjusting the type of a hydrogenation catalyst, the amount of the hydrogenation catalyst used, and hydrogenation conditions, and can be measured by a method described in Examples mentioned later.

The degree of hydrogenation of aromatic double bonds based on the vinyl aromatic monomer unit in the hydrogenated block copolymer (a-2) is not particularly limited and is preferably 50% or less, more preferably 30% or less, further preferably 20% or less.

When the hydrogenated block copolymer (a-2) has at least two polymer blocks A2 and at least two polymer blocks B2 described above, at least one of the polymer blocks B2 is positioned at the end of the hydrogenated block copolymer (a-2), and the content of the polymer block B2 positioned at the end is preferably 1% by mass or more, more preferably 2% by mass or more, further preferably 3% by mass or more, in the hydrogenated block copolymer (a-2). The upper limit value is preferably 10% by mass or less, more preferably 9% by mass or less, further preferably 8% by mass or less.

In such a case, the hydrogenated block copolymer (a-2) preferably has no peak of a weight-average molecular weight of 250,000 or larger.

In such a configuration, the content of all vinyl aromatic monomer units in the hydrogenated block copolymer (a-2) is preferably more than 40% by mass and 70% by mass or less.

When at least one of the polymer blocks B2 is positioned at the end of the hydrogenated block copolymer (a-2) and the content of the polymer block B2 positioned at the end falls within the numeric range described above, the thermoplastic elastomer composition of the present embodiment tends to have better flexibility and fluidity. The content of the polymer block B2 positioned at the end can be calculated by dividing the mass of conjugated diene polymerized at the end by the mass of all monomers used in the polymerization reaction.

In the configuration described above, when the hydrogenated block copolymer (a-2) has no peak of a weight-average molecular weight of 250,000 or larger, the fluidity of the thermoplastic elastomer composition of the present embodiment is improved, wettability to adherend surface is favorable, and the thermoplastic elastomer composition of the present embodiment tends to have favorable thermal bondability.

In such a configuration, when the content of all vinyl aromatic monomer units in the hydrogenated block copolymer (a-2) is more than 40% by mass and 70% by mass or less, balance tends to be favorable among the mechanical strength of the thermoplastic elastomer composition of the present embodiment, its thermal bonding strength to a polar group-containing thermoplastic resin, flexibility, and recovery properties.

In the hydrogenated block copolymer (a-2), a method of adjusting the timing of addition of monomers or the amounts of monomers added in a polymerization step for the hydrogenated block copolymer (a-2) is effective for positioning at least one of the polymer blocks B2 at the end, setting the content of the polymer block B2 positioned at the end to the numeric range described above, having no peak of a weight-average molecular weight of 250,000 or larger, and further setting a content of all vinyl aromatic monomer units in the hydrogenated block copolymer (a-2) to the numeric range described above.

### (Method for producing hydrogenated block copolymer)

Examples of the method for producing the hydrogenated block copolymers (a-1) and (a-2) include, but are not limited to, methods described in Japanese Patent Publication No. 36-19286, Japanese Patent Publication No. 43-17979, Japanese Patent Publication No. 46-32415, Japanese Patent Publication No. 49-36957, Japanese Patent Publication No. 48-2423, Japanese Patent Publication No. 48-4106, Japanese Patent Publication No. 51-49567, Japanese Patent Laid-Open No. 59-166518, etc.

The pre-hydrogenated block copolymer containing a conjugated diene monomer unit and a vinyl aromatic monomer unit in the hydrogenated block copolymers (a-1) and (a-2) can be produced by, for example, but not limited to, a method of performing anion living polymerization using a polymerization initiator such as an organic alkali metal compound in a hydrocarbon solvent.

Examples of the hydrocarbon solvent include, but are not limited to: aliphatic hydrocarbons such as n-butane, isobutane, n-pentane, n-hexane, n-heptane, and n-octane; alicyclic hydrocarbons such as cyclohexane, cycloheptane, and methylcycloheptane; and aromatic hydrocarbons such as benzene, toluene, xylene, and ethylbenzene.

The polymerization initiator is not particularly limited, and an organic alkali metal compound generally known to have anion polymerization activity against conjugated diene compounds and vinyl aromatic compounds can be used. Examples of the organic alkali metal compound include, but are not limited to, aliphatic hydrocarbon alkali metal compounds having 1 to 20 carbon atoms, aromatic hydrocarbon alkali metal compounds having 1 to 20 carbon atoms, and organic amino alkali metal compounds having 1 to 20 carbon atoms.

Examples of the alkali metal contained in the polymerization initiator include, but are not limited to, lithium, sodium, and potassium. One or two or more alkali metals may be contained in one molecule.

Specific examples of the polymerization initiator include n-propyllithium, n-butyllithium, sec-butyllithium, tert-butyllithium, n-pentyllithium, n-hexyllithium, benzyllithium, phenyllithium, tolyllithium, a reaction product of diisopropenylbenzene and sec-butyllithium, and a reaction product of divinylbenzene, sec-butyllithium, and a small amount of 1,3-butadiene.

Alternatively, siloxy group-containing alkyllithiums such as 1-(t-butoxy)propyllithium disclosed in U.S. Patent No. 5,708,092 and a lithium compound obtained by inserting one to several molecules of an isoprene monomer for improvement in solubility thereof, and 1-(t-butyldimethylsiloxy)hexyllithium disclosed in U.K. Patent No. 2,241,239, amino group-containing alkyllithiums disclosed in U.S. Patent No. 5,527,753, and aminolithiums such as lithium diisopropylamide and lithium hexamethyldisilazide may be used as the polymerization initiator.

In the copolymerization of the conjugated diene compound and the vinyl aromatic compound with the organic alkali metal compound as a polymerization initiator, a tertiary amine compound, an ether compound, or a metal alcoholate compound can be added as an adjuster in order to adjust the vinyl bond (1,2-bond or 3,4-bond) content attributed to the conjugated diene compound to be incorporated in the copolymer or to adjust the random copolymerizability of the conjugated diene compound and the vinyl aromatic compound.

The adjusters may be used singly or two or more thereof may be used in combination.

A compound represented by the general formula R1R2R3N can be used as the tertiary amine compound as the adjuster.

In this context, each of R1, R2, and R3 in the general formula represents a hydrocarbon group having 1 to 20 carbon atoms or a hydrocarbon group having a tertiary amino group.

Examples of the tertiary amine compound include, but are not limited to, trimethylamine, triethylamine, tributylamine, N,N-dimethylaniline, N-ethylpiperidine, N-methylpyrrolidine, N,N,N',N'-tetramethylethylenediamine, N,N,N',N'-tetraethylethylenediamine, 1,2-dipiperidinoethane, trimethylaminoethylpiperazine, N,N,N',N",N"-pentamethylethylenetriamine, and N,N'-dioctyl-p-phenylenediamine.

For example, a linear ether compound and a cyclic ether compound can be used as the ether compound as the adjuster.

Examples of the linear ether compound include, but are not limited to, dimethyl ether, diethyl ether, diphenyl ether, dialkyl ether compounds of ethylene glycol such as ethylene glycol dimethyl ether, ethylene glycol diethyl ether, and ethylene glycol dibutyl ether, and dialkyl ether compounds of diethylene glycol such as diethylene glycol dimethyl ether, diethylene glycol diethyl ether, and diethylene glycol dibutyl ether.

Examples of the cyclic ether compound include, but are not limited to, tetrahydrofuran, dioxane, 2,5-dimethyloxolane, 2,2,5,5-tetramethyloxolane, 2,2-bis(2-oxolanyl)propane, and alkyl ethers of furfuryl alcohol.

Examples of the metal alcoholate compound as the adjuster include, but are not limited to, sodium-t-pentoxide, sodium-t-butoxide, potassium-t-pentoxide, and potassium-t-butoxide.

The method for copolymerizing the conjugated diene compound and the vinyl aromatic compound with the organic alkali metal compound as a polymerization initiator is not particularly limited and may be batch polymerization, continuous polymerization, or a combination thereof.

A batch polymerization method is preferred in view of adjusting the molecular weight distribution to a preferred proper range.

The polymerization temperature is not particularly limited and is usually 0°C to 180°C, preferably 30°C to 150°C.

The time required for the polymerization differs depending on conditions and is usually within 48 hours, preferably 0.1 to 10 hours.

It is preferred to perform the polymerization in an inert gas atmosphere such as a nitrogen gas atmosphere. The polymerization pressure is not particularly limited as long as the pressure can fall within a range sufficient for maintaining the monomers and a solvent in a liquid phase in the polymerization temperature range described above.

Coupling reaction may be further performed by adding a necessary amount of a di- or higher functional coupling agent at the completion of polymerization.

The di- or higher functional coupling agent is not particularly limited, and any coupling agent known in the art can be used. Examples of the difunctional coupling agent include, but are not limited to: alkylalkoxysilane such as dimethyldimethoxysilane and dimethyldiethoxysilane; silicon halide compounds such as dimethyldichlorosilane and dimethyldibromosilane; and acid esters such as methyl benzoate, ethyl benzoate, phenyl benzoate, and phthalic acid esters.

The hydrogenated block copolymer (a-1) or (a-2) that has undergone coupling reaction with such a coupling agent does not violate the requirement to be non-modified.

Examples of the tri- or higher multifunctional coupling agents include, but are not limited to: tri- or higher hydric polyalcohols; polyvalent epoxy compounds such as epoxidized soybean oil and diglycidyl bisphenol A; alkylalkoxysilane such as methyltrimethoxysilane, tetramethoxysilane, methyltriethoxysilane, and tetraethoxysilane; and silicon halide compounds represented by the general formula R¹₍₄₋ₙ₎SiXₙ.

In this context, in the general formula, R¹ represents a hydrocarbon group having 1 to 20 carbon atoms, X represents halogen, and n represents an integer of 3 or 4.

Examples of the silicon halide compounds include, but are not limited to, methylsilyl trichloride, t-butylsilyl trichloride, silicon tetrachloride, and bromides thereof.

The hydrogenation catalyst for use in the production of the hydrogenated block copolymer is not particularly limited, and a hydrogenation catalyst described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, or Japanese Patent Publication No. 2-9041 can be used.

Preferred examples of the hydrogenation catalyst include titanocene compounds and mixtures of the titanocene compounds with reducing organometallic compounds.

Examples of the titanocene compounds include, but are not particularly limited to, compounds described in Japanese Patent Laid-Open No. 8-109219. Specific examples thereof include compounds having at least one or more ligands having a substituted or unsubstituted cyclopentadienyl structure (e.g., bis(cyclopentadienyl)titanium dichloride and mono(pentamethylcyclopentadienyl)titaniumtrichloride), an indenyl structure, or a fluorenyl structure.

Examples of the reducing organometallic compounds include, but are not limited to, organic alkali metal compounds such as organolithium, organomagnesium compounds, organoaluminum compounds, organoboron compounds, and organozinc compounds.

The reaction temperature of the hydrogenation reaction is usually 0 to 200°C, preferably 30 to 150°C.

The pressure of hydrogen for use in the hydrogenation reaction is preferably 0.1 to 15 MPa, more preferably 0.2 to 10 MPa, further preferably 0.3 to 5 MPa.

The reaction time of the hydrogenation reaction is usually 3 minutes to 10 hours, preferably 10 minutes to 5 hours.

The hydrogenation reaction can employ a batch process or a continuous process, or a combination thereof.

If necessary, catalyst residues may be removed from the reaction solution after the completion of hydrogenation reaction.

Examples of the method for separating the hydrogenated block copolymer from a solvent include, but are not limited to, a method which involves precipitating and recovering the hydrogenated block copolymer by the addition of a polar solvent, such as acetone or an alcohol, which serves as a poor solvent to the hydrogenated block copolymer, to the solution of the hydrogenated block copolymer, a method which involves adding the solution of the hydrogenated block copolymer into hot water with stirring and removing the solvent by steam stripping to recover the hydrogenated block copolymer, and a method which involves distilling off the solvent by directly heating the solution of the hydrogenated block copolymer.

An antioxidant may be added to the reaction solution for the production of the hydrogenated block copolymer (a).

Examples of the antioxidant include, but are not limited to, phenol antioxidants, phosphorus antioxidants, sulfur antioxidants, and amine antioxidants.

Specific examples thereof include 2,6-di-t-butyl-4-methylphenol, n-octadecyl-3-(4'-hydroxy-3',5'-di-t-butylphenyl)propionate, tetrakis-[methylene-3-(3',5'-dit-butyl-4'-hydroxyphenyl)propionate]methane], tris-(3,5-di-t-butyl-4-hydroxybenzyl)isocyanurate, 4,4'-butylidene-bis-(3-methyl-6-t-butylphenol), 3,9-bis[2-{3-(3-t-butyl-4-hydroxy-5-methylphenyl)propionyloxy}-1,1-dimethylethyl]-2,4,8,10-tetraoxaspiro[5,5]undecane, triethylene glycol-bis[3-(3-t-butyl-5-methyl-4-hydroxyphenyl)propionate], 1,6-hexanediol-bis-[3-(3,5-dit-butyl-4-hydroxyphenyl)propionate], 2,4-bis-(n-octylthio)-6-(4-hydroxy-3,5-di-t-butylanilino)1,3,5-triazine, pentaerythrityl-tetrakis[3-(3,5-di-t-butyl-4-hydroxyphenyl)propionate], 2,2-thio-diethylenebis[3-(3,5-di-t-butyl-4-hydroxyphenyl)propionate], N,N'-hexamethylenebis(3,5-di-t-butyl-4-hydroxyhydrocinnamamide), 3,5-di-t-butyl-4-hydroxybenzylphosphonate-diethyl ester, 1,3,5-trimethyl-2,4,6-tris(3,5-di-t-butyl-4-hydroxybenzyl)benzene, a mixture of calcium bis(ethyl 3,5-di-t-butyl-4-hydroxybenzylphosphonate) and polyethylene wax (50%), octylated diphenylamine, 2,4-bis[(octylthio)methyl]-o-cresol, isooctyl-3-(3,5-di-t-butyl-4-hydroxyphenyl)propionate, butyric acid, 3,3-bis(3-t-butyl-4-hydroxyphenyl)ethylene ester, 1,1,3-tris-(2-methyl-4-hydroxy-5-t-butylphenyl)butane, 1,3,5-tris(4-t-butyl-3-hydroxy-2,6-dimethylbenzyl)isocyanurate, 2-t-butyl-6-(3'-t-butyl-5'-methyl-2'-hydroxybenzyl)-4-methylphenyl-acrylate, and 2-[1-(2-hydroxy-3,5-di-t-pentylphenyl)-ethyl]-4,6-di-t-pentylphenyl acrylate.

### (Polypropylene resin (b))

The thermoplastic elastomer composition of the present embodiment contains a polypropylene resin (b).

Examples of the polypropylene resin (b) include, but are not limited to, propylene homopolymers, block copolymers and random copolymers of propylene with olefins other than propylene, preferably α-olefins having 2 to 20 carbon atoms, and blends thereof.

Examples of the α-olefins having 2 to 20 carbon atoms include, but are not limited to, ethylene, 1-butene, 1-hexene, 4-methyl-1-pentene, 1-octene, and 1-decene. An α-olefin having 2 to 8 carbon atoms is preferred, and ethylene, 1-butene, 1-hexene, or 4-methyl-1-pentene is more preferred.

These polypropylene resins (b) may be used singly or two or more thereof may be used in combination.

The melt flow rate (MFR) of the polypropylene resin (b) determined under conditions involving a temperature of 230°C and a load of 2.16 kg is preferably 0.1 to 50 g/10 min. The lower limit value is more preferably 0.5 g/10 min or more, further preferably 1.0 g/10 min or more. The upper limit value is more preferably 45 g/10 g or less, further preferably 40 g/10 min or less. When MFR of the polypropylene resin (b) falls within the range described above, the molding processability of the thermoplastic elastomer composition of the present embodiment tends to be further improved.

Examples of the method for producing the polypropylene resin (b) include, but are not limited to, a production method which involves polymerizing the monomers mentioned above using a Ziegler-Natta-type catalyst containing a titanium-containing solid transition metal component and an organometallic component in combination.

Examples of the transition metal component for use in the Ziegler-Natta-type catalyst include, but are not limited to, solid components containing titanium, magnesium and halogen as essential components and an electron-donating compound as an optional component, and titanium trichloride. Examples of the organometallic component include, but are not limited to, aluminum compounds.

Examples of the polymerization method for producing the polypropylene resin (b) include, but are not limited to, a slurry polymerization method, a vapor-phase polymerization method, a bulk polymerization method, a solution polymerization method, and a multi-stage polymerization method combining these methods.

In these polymerization methods, only propylene is polymerized in the case of obtaining a propylene homopolymer, and propylene and a monomer other than propylene are polymerized in the case of obtaining a copolymer.

In the thermoplastic elastomer composition of the present embodiment, the content of the polypropylene resin (b) is 10 parts by mass or more, preferably 20 parts by mass or more, more preferably 30 parts by mass or more, based on 100 parts by mass of the hydrogenated block copolymer (a-1). The upper limit value is 100 parts by mass, preferably 90 parts by mass or less, more preferably 80 parts by mass or less.

When the content of the polypropylene resin (b) is 10 parts by mass or more, favorable fluidity is obtained in the thermoplastic elastomer composition of the present embodiment, and excellent molding processability is obtained.

When the content of the polypropylene resin (b) is 100 parts by mass or less, favorable rebound resilience and flexibility are obtained in the thermoplastic elastomer composition of the present embodiment.

### (Non-aromatic softener (c))

The thermoplastic elastomer composition of the present embodiment contains a non-aromatic softener (c).

The non-aromatic softener (c) is not particularly limited as long as the non-aromatic softener (c) does not exhibit aromaticity and is capable of softening the thermoplastic elastomer composition of the present embodiment. A non-aromatic softener known in the art can be used.

Examples of the non-aromatic softener (c) include, but are not limited to, paraffin oil, naphthene oil, paraffin wax, liquid paraffin, white mineral oil, and plant-derived softeners. Among them, paraffin oil, liquid paraffin, or white mineral oil is preferred in view of the low-temperature characteristics, leak-out resistance, hygiene, and the like of a molded article containing the thermoplastic elastomer composition of the present embodiment.

The kinematic viscosity at 40°C of the non-aromatic softener (c) is preferably 10 to 500 mm²/sec.

When the kinematic viscosity at 40°C of the non-aromatic softener (c) is 10 mm²/sec or higher, the thermal deformation resistance and softener retention properties of the thermoplastic elastomer composition of the present embodiment tend to be further improved.

When the kinematic viscosity at 40°C of the non-aromatic softener (c) is 500 mm²/sec or lower, the fluidity of the thermoplastic elastomer composition of the present embodiment tends to be further improved, and molding processability tends to be further improved.

The kinematic viscosity of the non-aromatic softener (c) can be measured using a glass capillary viscometer.

In the thermoplastic elastomer composition of the present embodiment, the content of the non-aromatic softener (c) is 50 to 300 parts by mass, preferably 60 parts by mass or more, more preferably 70 parts by mass or more, based on 100 parts by mass of the hydrogenated block copolymer (a-1). The upper limit value is 300 parts by mass or less, preferably 250 parts by mass or less, more preferably 200 parts by mass or less.

When the content of the non-aromatic softener (c) falls within the range described above, the retention properties, i.e., the effect of suppressing bleed-out, of the non-aromatic softener (c) can be more improved and the resulting thermoplastic elastomer composition tends to have better molding processability, flexibility, and recovery properties.

### (Inorganic filler (d))

The thermoplastic elastomer composition of the present embodiment may contain an inorganic filler (d) in view of molding appearance, surface texture or feeling, and gloss adjustment.

Examples of the inorganic filler (d) include, but are not limited to, talc, calcium carbonate, calcium oxide, zinc carbonate, wollastonite, zeolite, wollastonite, silica, alumina, clay, titanium oxide, magnesium hydroxide, magnesium oxide, sodium silicate, calcium silicate, magnesium silicate, sodium aluminate, calcium aluminate, sodium aluminosilicate, zinc oxide, potassium titanate, hydrotalcite, barium sulfate, titanium black, and carbon black such as furnace black, thermal black, and acetylene black.

These inorganic fillers may be used singly, or two or more thereof may be used in combination.

Such an inorganic filler may be surface-treated in view of improvement in dispersibility in the thermoplastic elastomer composition of the present embodiment.

Examples of the surface treatment agent include fatty acids, resin acids, fats and oils, surfactants, and coupling agents (e.g., silane, titanium, phosphoric acid, and carboxylic acid coupling agents). The surface treatment agent is not limited thereto as long as the surface treatment agent can act on the surface of the inorganic filler.

### (Organic peroxide (e))

The thermoplastic elastomer composition of the present embodiment may be partially cross-linked in the presence of an organic peroxide (e) in view of thermal deformation resistance and recovery properties.

Examples of the organic peroxide (e) include, but are not limited to, 2,5-dimethyl-2,5-di(t-butylperoxy) hexane, dicumyl peroxide, 2,5-dimethyl-2,5-di(benzoylperoxy)hexane, t-butyl peroxybenzoate, t-butyl cumyl peroxide, diisopropylbenzene hydroxy peroxide, 1,3-bis(t-butylperoxyisopropyl)benzene, benzoyl peroxide, 1,1-di(t-butylperoxy)-3,3,5-trimethylcyclohexane, t-butyl hydroperoxide, 1,1,3,3-tetramethylbutyl hydroperoxide, cumene hydroperoxide, di-t-butyl peroxide, 1,1-di-t-butylperoxy-cyclohexane, 2,5-dimethyl-2,5-di(t-butylperoxy) hexyne-3, n-butyl-4,4-bis(t-butylperoxy) valerate, t-butyl peroxyisobutyrate, t-butyl peroxy-2-ethylhexanoate, and t-butyl peroxyisopropylcarbonate.

These organic peroxides may be used singly or two or more of the organic peroxides may be used in combination.

The amount of the organic peroxide (e) used is preferably 0.05 to 5 parts by mass, more preferably 0.1 to 4 parts by mass, further preferably 0.3 to 3 parts by mass, based on 100 parts by mass of the hydrogenated block copolymer (a-1).

When the amount of the organic peroxide (e) used falls within the range described above, the resulting thermoplastic elastomer composition tends to have better thermal deformation resistance and recovery properties without reducing processability.

### (Crosslinking coagent (f))

In the case of partially cross-linking the thermoplastic elastomer composition of the present embodiment, a crosslinking coagent can be used, if necessary, for adjusting the degree of cross-linking.

Examples of the crosslinking coagent (f) include, but are not limited to, trimethylolpropane triacrylate, triallyl isocyanurate, triallyl cyanurate, triallyl formal, triallyl trimellitate, N,N'-m-phenylene bismaleimide, dipropargyl terephthalate, diallyl phthalate, tetraallyl terephthalamide, triallyl phosphate, divinylbenzene, ethylene dimethacrylate, diallyl phthalate, quinone dioxime, ethylene glycol dimethacrylate, polyfunctional methacrylate monomers, polyhydric alcohol methacrylate and acrylate, and unsaturated silane compounds (e.g., vinyltrimethoxysilane and vinyltriethoxysilane).

These crosslinking coagents (f) may be used singly, or two or more thereof may be used in combination, if necessary.

The amount of the crosslinking coagent (f) used is preferably 0.1 parts by mass or more, more preferably 0.2 parts by mass or more, further preferably 0.5 parts by mass or more, based on 100 parts by mass of the hydrogenated block copolymer (a-1). The upper limit value is preferably 10 parts by mass or less, more preferably 8 parts by mass or less, further preferably 7 parts by mass or less.

### (Other components)

The thermoplastic elastomer composition of the present embodiment may further contain other additives in addition to the components (a) to (f) mentioned above without impairing the object of the present embodiment.

Examples of such other additives include heat stabilizers, antioxidants, ultraviolet absorbers, antiaging agents, plasticizers, light stabilizers, crystal nucleating agents, impact modifiers, pigments, lubricants, antistatic agents, flame retardants, flame retardant aids, compatibilizing agents, and tackifiers.

Particularly, the addition of silicone oil as a lubricant improves slidability and is effective for reduction in needlestick resistance and improvement in coring.

Examples of the type of the silicone oil include general dimethylpolysiloxane and phenylmethylpolysiloxane. Particularly, dimethylpolysiloxane is preferred.

The amount of the silicone oil added is preferably 0.5 parts by mass or more, more preferably 0.7 parts by mass or more, further preferably 1.0 parts by mass or more, based on 100 parts by mass of the hydrogenated block copolymer (a-1). The upper limit value is preferably 10 parts by mass or less, more preferably 7 parts by mass or less, further preferably 5 parts by mass or less.

The kinematic viscosity of the silicone oil is not particularly limited and is preferably 10 to 10000 mm²/sec, more preferably 50 to 7000 mm²/sec, further preferably 100 to 5000 mm²/sec.

The other additives may be used singly, or two or more thereof may be used in combination.

### (Method for producing thermoplastic elastomer composition)

The method for producing the thermoplastic elastomer composition of the present embodiment or a molded article (e.g., pellets) made of the thermoplastic elastomer composition is not particularly limited, and a conventional method known in the art can be applied thereto.

Examples thereof include a melt kneading method using a general mixing machine such as a pressure kneader, a Banbury mixer, an internal mixer, Labo Plastomill, Mix Labo, a single-screw extruder, a twinscrew extruder, a co-kneader, or a multi-screw extruder, and a method which involves dissolving or dispersing each component, mixing the components, and removing a solvent by heating.

In the case of partially cross-linking the thermoplastic elastomer composition of the present embodiment with the organic peroxide (e) mentioned above, the complexion of the components (a) to (d) and the partial cross-linking with the organic peroxide (e) and the crosslinking coagent (f) optionally added may be performed at the same time, or the partial cross-linking may be performed by the addition of the organic peroxide (e) and optionally the crosslinking coagent (f) after the complexion of the component (a) to the component (d).

Alternatively, a portion of the components (a) to (d), the organic peroxide (e) and optionally the crosslinking coagent (f) may be mixed for cross-linking, followed by the mixing of the other components.

The partial cross-linking can be performed at a temperature that causes the degradation of the organic peroxide (e) used, generally, under temperature conditions of 150 to 250°C.

In the case of performing the partial or complete complexion of the components (a) to (d) and the cross-linking with the organic peroxide (e) and the crosslinking coagent (f) optionally added at the same time, the complexion may be performed by using the melt kneading machine described above at a temperature that causes the degradation of the organic peroxide (e) used.

### [Double layer molded article]

The double layer molded article of the present embodiment has the thermoplastic elastomer composition layer of the present embodiment and a polar group-containing thermoplastic resin layer.

The double layer molded article of the present embodiment is a double layer molded article having a polar group-containing thermoplastic resin layer and a thermoplastic elastomer composition layer containing a hydrogenated block copolymer (a), a polypropylene resin (b), and a non-aromatic softener (c), and the thermoplastic elastomer composition layer is disposed in contact with the polar group-containing thermoplastic resin layer.

The hydrogenated block copolymer (a) is a non-modified block copolymer containing no modifying group. Such a non-modified hydrogenated block copolymer (a) produces a thermoplastic elastomer composition free from odor, color, and contamination with impurities resulting from unreacted products.

The term "non-modified" excludes the case where the hydrogenated block copolymer (a) contains a modifying group formed by a predetermined modifying agent.

Examples of the modifying group include an amino group, a nitro group, an amide bond, and an azo bond containing a N atom, a ketone group, a carbonyl group, a carboxy group, and an aldehyde group containing an O atom bonded alone to a C atom through a double bond, a hydroxy group containing an O atom and a H atom bonded to each other, a sulfo group containing a S atom, and other compound groups bonded to a halogen element such as a F atom, a Cl atom, or a Br atom.

The requirement to be "non-modified" is satisfied by the case where the hydrogenated block copolymer (a), when obtained through coupling reaction with a coupling agent at the completion of polymerization reaction, has, as residues, a Si atom derived from the coupling agent and an O atom adjacent thereto and bonded to a straight chain.

The hydrogenated block copolymer (a) is a hydrogenated block copolymer which is a hydrogenated product of a block copolymer having a vinyl aromatic monomer unit and a conjugated diene monomer unit and has one or more molecular weight peaks (weight-based molecular weight; PMw) from 30,000 to smaller than 150,000 in GPC. The hydrogenated block copolymer (a) has one or more molecular weight peaks preferably from 40,000 to 130,000, more preferably from 50,000 to 110,000.

When the molecular weight peak of the hydrogenated block copolymer (a) is 30,000 or larger, the thermal deformation resistance and recovery properties of the thermoplastic elastomer composition of the present embodiment tend to be improved. When the molecular weight peak is smaller than 150,000, the fluidity of the thermoplastic elastomer composition of the present embodiment is improved and the moldability and thermal bondability of the thermoplastic elastomer composition of the present embodiment tend to be improved.

PMw of the hydrogenated block copolymer can be measured by GPC and can specifically be measured by a method described in Examples mentioned later.

The content of all vinyl aromatic monomer units in the hydrogenated block copolymer having the molecular weight peaks from 30,000 to smaller than 150,000 in GPC is 35% by mass or more, preferably 37% by mass or more, more preferably 40% by mass or more, further preferably more than 40% by mass and 66% by mass or less. The upper limit value is 70% by mass or less, preferably 68% by mass or less, more preferably 66% by mass or less.

When the content of all vinyl aromatic monomer units in the hydrogenated block copolymer having the molecular weight peaks from 30,000 to smaller than 150,000 in GPC is 35% by mass or more, the mechanical strength of the thermoplastic elastomer composition of the present embodiment and its affinity for a polar group-containing thermoplastic resin are improved and sufficient thermal bonding strength tends to be obtained. When the content of all vinyl aromatic monomer units is 70% by mass or less, the flexibility and recovery properties of the thermoplastic elastomer composition of the present embodiment tend to be further improved.

The content of all vinyl aromatic monomer units can be controlled to the numeric range described above by adjusting the amounts of monomers added in a polymerization step for the hydrogenated block copolymer, and can be calculated from absorption intensity at 262 nm by a method described in Examples mentioned later using an ultraviolet spectrophotometer.

The vinyl bond content before hydrogenation in the conjugated diene monomer unit of the hydrogenated block copolymer having the molecular weight peaks from 30,000 to smaller than 150,000 in GPC is 60% by mol or more, preferably 63% by mol or more, more preferably 65% by mol or more. The upper limit value is 95% by mol or less, preferably 90% by mol or less, more preferably 85% by mol or less.

When the vinyl bond content before hydrogenation in the conjugated diene monomer unit of the hydrogenated block copolymer having the molecular weight peaks from 30,000 to smaller than 150,000 in GPC is 60% by mol or more, compatibility with the polypropylene resin (b) tends to be improved and the thermoplastic elastomer composition of the present embodiment tends to have favorable thermal bondability. Further, fluidity is also improved, wettability following fine irregularities of adherend surface is favorable, and the thermoplastic elastomer composition of the present embodiment tends to have favorable thermal bondability.

When the vinyl bond content before hydrogenation in the conjugated diene monomer unit of the hydrogenated block copolymer having the molecular weight peaks from 30,000 to smaller than 150,000 in GPC is 95% by mol or less, there is a tendency that sufficient mechanical strength can be ensured in the thermoplastic elastomer composition of the present embodiment.

The vinyl bond content of the conjugated diene monomer unit can be measured by nuclear magnetic resonance spectrometry (NMR) using the block copolymer and can specifically be measured by a method described in Examples mentioned later. The vinyl bond content can be controlled to the numeric range mentioned above by adjusting the type of an adjuster such as a tertiary amine mentioned later and the amount of the adjuster added.

The hydrogenated block copolymer (a) constituting the thermoplastic elastomer composition is a hydrogenated polymer of a block copolymer having a vinyl aromatic monomer unit and a conjugated diene monomer unit, as mentioned above. The hydrogenated block copolymer (a) further has one or more molecular weight peaks (weight-based molecular weight; PMw) from 150,000 to 550,000 in GPC. The molecular weight with the peak is preferably 170,000 or larger, more preferably 190,000 or larger, further preferably 210,000 or larger. The molecular weight is preferably 500,000 or smaller, more preferably 450,000 or smaller, further preferably 400,000 or smaller, still further preferably 350,000 or smaller, even further preferably 300,000 or smaller.

When the peak molecular weight of the hydrogenated block copolymer is 150,000 or larger, the thermoplastic elastomer composition of the present embodiment tends to have favorable thermal deformation resistance and recovery properties. When the peak molecular weight of the hydrogenated block copolymer is 550,000 or smaller, sufficient molding processability tends to be obtained because the thermoplastic elastomer composition exhibits favorable fluidity.

PMw of the hydrogenated block copolymer can be measured by GPC and can specifically be measured by a method described in Examples mentioned later.

The content of all vinyl aromatic monomer units in the hydrogenated block copolymer having the molecular weight peaks from 150,000 to 550,000 in GPC is 15% by mass to less than 35% by mass, preferably 17% by mass or more, more preferably 19% by mass or more, further preferably 21% by mass or more, still further preferably 23% by mass or more.

The content is preferably 34% by mass or less, more preferably 33% by mass or less.

When the content of all vinyl aromatic monomer units in the hydrogenated block copolymer having the molecular weight peaks from 150,000 to 550,000 in GPC is 15% by mass or more, the mechanical strength and thermal deformation resistance of the thermoplastic elastomer composition of the present embodiment tend to be improved. When the content of all vinyl aromatic monomer units in the hydrogenated block copolymer having the molecular weight peaks from 150,000 to 550,000 in GPC is less than 35% by mass, the flexibility, recovery properties, and rebound resilience of the thermoplastic elastomer composition of the present embodiment tend to be improved.

The content of all vinyl aromatic monomer units can be controlled to the numeric range described above by adjusting the amounts of monomers added in a polymerization step for the hydrogenated block copolymer, and can be calculated from absorption intensity at a wavelength of 262 nm by a method described in Examples mentioned later using an ultraviolet spectrophotometer.

The degree of hydrogenation of aliphatic double bonds derived from the conjugated diene compound, i.e., double bonds of the conjugated diene monomer unit, in the hydrogenated block copolymer having the molecular weight peaks from 150,000 to 550,000 in GPC is 50% by mol or more, preferably 60% by mol or more, more preferably 70% by mol or more. When the degree of hydrogenation is 50% by mol or more, there is a tendency that reduction in mechanical properties ascribable to thermal deterioration (oxidative deterioration) can be more effectively suppressed. When the degree of hydrogenation is 70% by mol or more, more favorable weather resistance tends to be obtained. The upper limit value of the degree of hydrogenation is not particularly limited and is preferably 100% or less, more preferably 99% or less.

The degree of hydrogenation of double bonds in the conjugated diene monomer unit of the hydrogenated block copolymer having the molecular weight peaks from 150,000 to 550,000 in GPC may be controlled to the numeric range described above by adjusting the type of a hydrogenation catalyst, the amount of the hydrogenation catalyst used, and hydrogenation conditions, and can be measured by a method described in Examples mentioned later.

The double layer molded article of the present embodiment preferably has a configuration in which the thermoplastic elastomer composition layer is thermal fusion-bonded to a polar group-containing thermoplastic resin layer.

Specifically, the thermoplastic elastomer composition of the present embodiment constitutes the thermoplastic elastomer composition layer thermal fusion-bonded to the polar group-containing thermoplastic resin layer constituting the double layer molded article.

The double layer molded article of the present embodiment mentioned above has the following configuration as a suitable form.

Specifically, the double layer molded article of the present embodiment is preferably a double layer molded article in which

the hydrogenated block copolymer (a) consists of a hydrogenated block copolymer (a-1) and a hydrogenated block copolymer (a-2),

the component (a-1) satisfies the following requirements (1-1) to (1-4),

the component (a-2) satisfies the following requirements (2-1) to (2-6),

the thermoplastic elastomer composition layer contains 100 parts by mass of the component (a-1), 10 to 100 parts by mass of the component (b), and 50 to 300 parts by mass of the component (c), and

a content of the component (a-2) in the thermoplastic elastomer composition layer is 5 to 70% by mass based on the total amount of the components (a-1), (a-2), (b), and (c):
(1-1): one or more polymer blocks A1 composed mainly of a vinyl aromatic monomer unit, and one or more polymer blocks B1 composed mainly of a conjugated diene monomer unit are contained,
(1-2): a content of all vinyl aromatic monomer units is 15% by mass or more and less than 35% by mass,
(1-3): a weight-average molecular weight is 150,000 to 550,000, and
(1-4): 50% by mol or more of double bonds in the conjugated diene monomer unit are hydrogenated,
(2-1): one or more polymer blocks A2 composed mainly of a vinyl aromatic monomer unit, and one or more polymer blocks B2 composed mainly of a conjugated diene monomer unit are contained,
(2-2): a content of the vinyl aromatic monomer unit in the polymer block A2 is 50% by mass or more,
(2-3): a content of all vinyl aromatic monomer units is 35% by mass to 70% by mass,
(2-4): a weight-average molecular weight is 30,000 or larger and smaller than 150,000,
(2-5): a vinyl bond content before hydrogenation in the conjugated diene monomer unit in the polymer block B2 is 60% by mol to 95% by mol, and
(2-6): 50% by mol or more of double bonds in the conjugated diene monomer unit are hydrogenated.

The double layer molded article has the configuration described above and thereby has practically favorable odor and color and is excellent in moldability, thermal bonding strength, recovery properties, and mechanical strength.

In the double layer molded article of the present embodiment, suitable forms of the hydrogenated block copolymers (a-1) and (a-2) are the same as those in the thermoplastic elastomer composition of the present embodiment.

### (Polar group-containing thermoplastic resin)

The double layer molded article of the present embodiment has a polar group-containing thermoplastic resin layer, as mentioned above.

The polar group-containing thermoplastic resin constituting the polar group-containing thermoplastic resin layer contains one or more polar groups in a molecule.

Examples of the polar group-containing thermoplastic resin include, but are not limited to, polyamide resins, polyphenylene sulfide resins, polyester resins, polycarbonate resins, acrylonitrile-butadiene-styrene copolymer (ABS) resins (hereinafter, also simply referred to as "ABS"), acrylic resins, and polyacetal resins.

These resins may be used singly or as a mixture of two or more thereof.

The polyamide resin has an amino group, a carboxyl group, and an amide group in the backbone.

The polyphenylene sulfide resin has carboxylic acid at the end of a polymer chain.

The polyester resin has an ester structure in the backbone and has a terminal hydroxy group or carboxyl group.

The polycarbonate resin has carbonic acid ester in the backbone and has a terminal hydroxyl group.

The ABS resin has a nitrile group.

The acrylic resin is a generic name for polyacrylic acid, polyacrylic acid ester, polymethacrylic acid, and polymethacrylic acid ester and has a carboxyl group and/or an ester group.

The polyacetal resin has an ether structure.

### (Purpose)

The double layer molded article of the present embodiment can be suitably used for sealing members required to have flexibility, recovery properties, or the like in home electronics components, industrial products, automotive components and interior materials, medical equipment and tools, building materials, tools, toys, general merchandise, and the like, grips required to have fit or texture when held by hands, and purposes that require protection against impact upon contact or collision with human bodies or others.

### (Method for producing double layer molded article)

The method for producing the double layer molded article of the present embodiment contains the steps of: molding the polar group-containing thermoplastic resin to obtain a molded article; and injecting the thermoplastic elastomer composition of the present embodiment to a gap part between the mold and the molded article in a state in which the obtained molded article is placed in the mold, followed by thermal fusion bonding.

A method is generally preferred which involves preparing a molded article of the polar group-containing thermoplastic resin, inserting the molded article to a mold, and filling pellets of the thermoplastic elastomer composition to a gap part of the mold, followed by thermal fusion bonding.

The method for producing the double layer molded article is also preferably an insert molding method containing the step of first forming a molded article of the polar group-containing thermoplastic resin, engaging the molded article in another mold, and injecting the thermoplastic elastomer composition to a gap, followed by thermal fusion bonding.

Further, the method is also preferably a double injection molding method which involves using an injection molding machine configured to have two or more cylinders, first molding the polar group-containing thermoplastic resin, then partially changing a mold to cause a gap part between the polar group-containing thermoplastic resin and the mold, and injecting the thermoplastic elastomer composition to this gap part from another cylinder.

The double layer molded article of the present embodiment having the thermoplastic elastomer composition layer and the polar group-containing thermoplastic resin layer can be produced by any of the molding methods.

The molding temperature is not particularly limited and is preferably 150°C to 280°C.

### Examples

Hereinafter, the present embodiment will be specifically described with reference to concrete Examples and Comparative Examples. However, the present invention is not limited by the following Examples and Comparative Examples by any means.

Evaluation methods and measurement methods for physical properties applied to Examples and Comparative Examples will be first described below.

### [Method for evaluating hydrogenated block copolymers (a-1) and (a-2)]

### ((1) Weight-average molecular weight, number-average molecular weight, peak molecular weight, and molecular weight distribution)

The weight-average molecular weight (Mw), number-average molecular weight (Mn), peak molecular weight (weight-based molecular weight at a peak position; PMw), and molecular weight distribution(Mw/Mn) of the hydrogenated block copolymers (a-1) and (a-2) were determined on the basis of the molecular weight of a chromatogram peak using a calibration curve determined from the measurement on commercially available standard polystyrene (created by using the peak molecular weight of standard polystyrene).

HLC-8320 ECOSEC for collection was used as measurement software, and HLC-8320 ECOSEC for analysis was used as analysis software.

### (Measurement conditions)

GPC: HLC-8320 GPC (manufactured by Tosoh Corp.)
Detector: RI
Detection sensitivity: 3 MV/min
Sampling pitch; 600 MSEC
Column: TSKGEL SUPERHZM-N (6 MMI. D × 15 CM), 4 columns (manufactured by Tosoh Corp.)
Solvent: THF
Flow rate: 0.6 ML/min
Concentration: 0.5 MG/ML
Column temperature: 40°C
Injection volume: 20 ML

### ((2) Content of all vinyl aromatic monomer units (total styrene content))

A given amount of the hydrogenated block copolymer was dissolved in chloroform, and the solution was analyzed using an ultraviolet spectrophotometer (manufactured by Shimadzu Corp., UV-2450). The content of styrene was calculated using a calibration curve from the peak intensity of an absorption wavelength (262 nm) attributed to styrene.

### ((3) Styrene content in polystyrene block A in hydrogenated block copolymers (a-1) and (a-2))

The styrene content in polystyrene block A in the hydrogenated block copolymer was determined by oxidatively degrading each of the hydrogenated block copolymer mentioned later with t-butyl hydroperoxide with osmium tetroxide as a catalyst, then precipitating the resultant in methanol for solid-liquid separation, analyzing the precipitates using an ultraviolet spectrophotometer (manufactured by Shimadzu Corp., UV-2450), calculating a value using a calibration curve from the peak intensity of an absorption wavelength (262 nm) attributed to styrene, and calculating the styrene content in the polystyrene block A from the weight ratio between the calculated value and the amount of styrene added at the time of production.

### ((4) Styrene content in polystyrene block A' in hydrogenated block copolymer (a-2))

The styrene content in polystyrene block A' in the hydrogenated block copolymer (a-2) was calculated according to the following expression.

### (Expression)

Styrene content in the polystyrene block A' = ((Total styrene content - Styrene content in the polystyrene block A) / Amounts of styrene and butadiene added at the time of block A' production) × 100

### ((5) Vinyl bond content)

The vinyl bond content in a polybutadiene block in the block copolymer was measured using a nuclear magnetic resonance apparatus (NMR) under conditions given below.

In the tables below, B represents the polybutadiene block.

After the completion of polymerization reaction, methanol was added in a large amount to the reaction solution to precipitate and recover the block copolymer. Subsequently, the block copolymer was extracted with acetone, and the extract was vacuum-dried and used as a sample for ¹H-NMR analysis. The ¹H-NMR analysis conditions will be described below.

### (Measurement conditions)

Measurement equipment: JNM-LA400 (manufactured by JEOL Ltd.)
Solvent: deuterated chloroform
Sample concentration: 50 MG/ML
Observation frequency: 400 MHZ
Chemical shift reference: TMS (tetramethylsilane)
Pulse delay: 2.904 seconds
The number of scans: 64
Pulse width: 45°
Measurement temperature: 26°C

The vinyl bond content was determined from the ratio of the total peak area of 1,2-bonds and 3,4-bonds to the total area of all peaks related to the conjugated diene monomer unit (1,2-bonds, 3,4-bonds, and 1,4-bonds) in the obtained peaks.

### ((6) Degree of hydrogenation)

The degree of hydrogenation of double bonds in the conjugated diene monomer unit in the block copolymer was determined using a nuclear magnetic resonance apparatus (NMR) under the same conditions as in ((5) Vinyl bond content) described above.

The degree of hydrogenation was determined from the ratio of the total peak area of hydrogenated 1,2-bonds, hydrogenated 3,4-bonds, and hydrogenated 1,4-bonds to the total area of all peaks related to double bonds in the conjugated diene monomer unit (1,2-bonds, 3,4-bonds, and 1,4-bonds) in the obtained peaks.

### ((7) Content of terminal polybutadiene block)

The content of a terminal polybutadiene block in the block copolymer was determined from the amounts of monomers added at the time of production and the polymerization reaction rate of each block confirmed by gas chromatography (hereinafter, referred to as GC).

### <Confirmation of polymerization reaction rate of each polymer block in block copolymer>

Approximately 20 mL of a polymer solution sampled in each step of the polymerization process for the block copolymer before hydrogenation was injected to a hermetically sealed 100 mL bottle containing 0.50 mL of an internal standard n-propylbenzene and approximately 20 mL of toluene to prepare a sample.

This sample was measured with a gas chromatography apparatus (manufactured by Shimadzu Corp.: GC-14B) equipped with a packed column carrying Apiezon grease. The amounts of residual monomers in the polymer solution were determined from calibration curves of a butadiene monomer and a styrene monomer obtained beforehand to confirm that the polymerization rates of the butadiene monomer and the styrene monomer were 100%.

The polymerization rate of butadiene was measured at a constant temperature of 90°C, and the polymerization rate of styrene was measured under conditions of 90°C (held for 10 minutes) elevated to 150°C (10°C/min).

### ((8) Amount of acid anhydride group added)

The amount of an acid anhydride group added was defined as the amount of an acid anhydride group added (% by mass) through addition reaction in the whole hydrogenated block copolymer.

In a measurement method, the block copolymer was first boiled in acetone for 60 minutes, then dried in vacuum, and dissolved in toluene. Subsequently, a phenol phthalein indicator was added to the solution and titrated with a methanol solution of sodium methylate (CH₃ONa), and the amount of an acid anhydride group added was calculated from the amount of sodium methylate added to the acid anhydride group.

### [Production of thermoplastic elastomer composition]

### (Examples 1 to 25) and (Comparative Examples 1 to 15)

Pellets of each thermoplastic elastomer composition were obtained by melt kneading the blend in the ratio (parts by mass) shown below in the tables using a twinscrew extruder ("TEX-30αII" manufactured by The Japan Steel Works, LTD., cylinder aperture: 30 mm) at a set temperature of 230°C.

[Method for evaluating thermoplastic elastomer composition]

### ((9) Melt flow rate (MFR))

The melt flow rate (MFR) of the pellets of the thermoplastic elastomer composition obtained as mentioned above was measured in accordance with ASTM D 1238 under conditions of a temperature of 230°C and a load of 2.16 kg.

### ((10) Odor sensory test)

100 g of the pellets of the thermoplastic elastomer composition was placed in a 500 mL pressure-tight glass bottle, which was then sealed, heated at 70°C for 1 hour, and then left at room temperature for 48 hours.

Then, 10 panelists examined odor from the mouth of the glass bottle.

Assessment was made on the basis of an average of odor intensity indexes given below.

○: odor intensity index of less than 3 and ×: odor intensity index of 3 or more. A sample given ○ was evaluated as being practically favorable.

### <Odor intensity index>

0: no odor, 1: slightly perceivable odor, 2: weak, but perceivable odor, 2.5: intermediate between 2 and 3, 3: easily perceivable odor, 3.5: intermediate between 3 and 4, 4: strong odor, and 5: intense odor

### [Preparation of press sheet]

The pellets of the thermoplastic elastomer composition obtained as mentioned above were preheated at 200°C for 5 minutes under pressurization conditions of 0.5 kgf/cm² and pressed at 200°C for 2 minutes under pressurization conditions of 100 kgf/cm² in a 50 t electric heat press manufactured by Toho Press Seisakusho K.K. using a mold (size: 110 mm × 220 mm × 2 mm in thickness) to prepare a press sheet of 2 mm in thickness.

The obtained press sheet was used to measure physical properties according to measurement methods described below.

### [Method for evaluating press sheet]

### ((11) Hardness)

The hardness was measured in accordance with JIS K 6253 using a type A durometer.

When a sample had a Shore A hardness of 90 or less, it was determined that the sample has flexibility with no practical problem, and when a sample had a Shore A hardness of 80 or less, it was determined that the sample has sufficient flexibility.

### ((12) Tensile stress, tensile breaking strength, and tensile breaking elongation)

A tensile test was carried out as described below in accordance with JIS K 6251 at a crosshead speed of 500 mm/min using dumbbell No. 3.

Tensile stress (M300) ... Stress at 300% elongation was measured.

Tensile breaking strength (Tb) ... Stress upon breaking was measured. When a sample had Tb of 2 MPa or more, it was determined that the sample has mechanical strength with no practical problem, and when a sample had Tb of 4 MPa or more, it was determined that the sample has sufficient mechanical strength.

Tensile breaking elongation (Eb) ... Elongation upon breaking was measured. When a sample had Eb of 500% or more, it was determined that the sample has sufficient flexibility.

### ((13) Dunlop rebound resilience)

The Dunlop rebound resilience was measured at 23°C in accordance with BS 903 using a Dunlop rebound resilience tester.

When a sample had Dunlop rebound resilience of 30% or more, it was determined that the sample has practically favorable texture.

### ((14) Compression set at 40°C)

In accordance with the compression set test of JIS K 6301, the press sheet of 2 mm in thickness was punched into a round-shaped piece of 29 mm in diameter. The initial thickness of a stack of six pieces of such round sheets was measured at 23°C. Then, the stack was left in an oven of 40°C for 22 hours in a 25% compressed state and then taken out therefrom. After the release from the compression, the stack was left at 23°C for 30 minutes, and a residual strain rate was then determined. When a sample had a residual strain rate of 70% or less, it was determined that the sample has practically sufficient recovery force from deformation.

### ((15) Color difference)

The b* value (yellowness) of a press sheet of the thermoplastic elastomer composition obtained in the paragraph [Production of thermoplastic elastomer composition] was measured using a colorimeter [manufactured by Denshoku Industries Co., Ltd., color meter ZE6000 (product name)] in accordance with JIS Z8781-4.

The measurement method was a reflection method and involved placing the sheet on a sample table of 30 mmφ and placing a white sample hold thereon, followed by measurement.

Assessment was measured according to the following scale:
○: b* value of less than 10, ×: b* value of 10 or more. It was determined that a sample given ○ is practically favorable.

### ((16) Transparency)

The haze value of a 2 mm thick press sheet of the thermoplastic elastomer composition obtained in the paragraph [Production of thermoplastic elastomer] was measured using a haze meter [manufactured by Suga Test Instruments Co., Ltd., HZ-V3 (product name)] in accordance with JIS K7136, and transparency was evaluated.

It was determined that a sample having a haze value exceeding 85% has no transparency; and a sample having a haze value of 85% or less has a transparency.

### [Production of double layer molded article]

Pellets of the thermoplastic elastomer composition obtained in the paragraph [Production of thermoplastic elastomer] were used. A 95 mm × 145 mm × 2 mm (thickness) molded product of a polar group-containing thermoplastic resin formed in advance was inserted into a mold cavity in an injection molding machine FNX110III-18A (manufactured by Nissei Plastic Industrial Co., Ltd.), and a 100 mm × 150 mm × 2 mm (thickness) thermoplastic elastomer composition was injection-molded on a superficial part thereof.

The injection molding conditions were as follows: resin temperature: 240°C, injection rate: 40 mm/sec, injection time: 10 seconds, mold temperature: 40°C, and cooling time: 30 seconds.

### [Method for evaluating double layer molded article]

### ((16) Thermal fusion bonding strength)

The thermal fusion bonding strength of the thermoplastic elastomer composition to the polar group-containing thermoplastic resin was measured by a 90-degree peel test using the double layer molded article mentioned above. A 10 mm wide incision was made on the surface on the thermoplastic elastomer composition side of the double layer molded article, and the end thereof was peeled by several cm in advance. At the peeled part, a layer consisting of the thermoplastic elastomer composition and a layer consisting of the polar group-containing thermoplastic resin were separately fixed to chucks, respectively, of a tensile tester [manufactured by MinebeaMitsumi Inc., TGE-500N (product name)]. The layer consisting of the thermoplastic elastomer composition and the layer consisting of the polar group-containing thermoplastic resin were pulled at 300 mm/min in the direction of 90° to separate the two layers. The tensile force applied upon peeling was regarded as the thermal fusion bonding strength (N/cm) of the double layer molded article of the thermoplastic elastomer composition and the polar group-containing thermoplastic resin and evaluated according to the scale given below.

Assessment was made according to the following scales of 1 to 5, and it was determined that a sample given 5 is excellent and a sample given 4 is practically favorable.

### <Scale for evaluating thermal fusion bonding strength>

5: 20 N/cm or more
4: 10 N/cm or more and less than 20 N/cm
3: 5 N/cm or more and less than 10 N/cm
2: 1 N/cm or more and less than 5 N/cm
1: less than 1 N/cm

### [Each component used in production of thermoplastic elastomer composition]

Hereinafter, each component used in the production of the thermoplastic elastomer composition will be described.

### (Preparation of hydrogenation catalyst)

A hydrogenation catalyst used for preparing a hydrogenated block copolymer mentioned later was prepared according to the following method.

A reaction container equipped with a stirring apparatus was purged with nitrogen in advance and charged with 1 L of dried and purified cyclohexane.

Next, 100 mmol of bis(η5-cyclopentadienyl)titanium dichloride was added thereto.

While the contents were thoroughly stirred, a n-hexane solution containing 200 mmol of trimethylaluminum was added thereto. The mixture was reacted at room temperature for approximately 3 days to obtain a hydrogenation catalyst.

### (Hydrogenated block copolymer (1))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.062 parts by mass of n-butyllithium based on 100 parts by mass of all monomers, and 0.34 mol of tetramethylethylenediamine (hereinafter, referred to as TMEDA) based on 1 mol of n-butyllithium were added thereto, followed by polymerization at 70°C for 25 minutes.

Subsequently, a cyclohexane solution containing 68 parts by mass of a 1,3-butadiene monomer was added thereto and polymerized at 70°C for 40 minutes.

Finally, a cyclohexane solution containing 16 parts by mass of a styrene monomer was added thereto and polymerized at 70°C for 25 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C.

After the completion of hydrogenation reaction, 0.3 parts by mass of octadecyl-3-(3,5-di-t-butyl-4-hydroxyphenyl)propionate based on 100 parts by mass of the block copolymer were added thereto as a stabilizer to obtain a hydrogenated block copolymer (1).

The obtained hydrogenated block copolymer (1) had a total styrene content of 31.8% by mass, a styrene content of 98.7% by mass in the polystyrene block A, a vinyl bond content of 35.5% by mol before hydrogenation in the polybutadiene block, a weight-average molecular weight of 296000 as the whole polymer, and a molecular weight distribution of 1.21. The degree of hydrogenation of aliphatic double bonds derived from 1,3-butadiene was 99.5%.

### (Hydrogenated block copolymer (2))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.088 parts by mass of n-butyllithium based on 100 parts by mass of all monomers, and 0.34 mol of tetramethylethylenediamine (hereinafter, referred to as TMEDA) based on 1 mol of n-butyllithium were added thereto, followed by polymerization at 70°C for 25 minutes.

Subsequently, a cyclohexane solution containing 68 parts by mass of a 1,3-butadiene monomer was added thereto and polymerized at 70°C for 40 minutes.

Finally, a cyclohexane solution containing 16 parts by mass of a styrene monomer was added thereto and polymerized at 70°C for 25 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C.

After the completion of hydrogenation reaction, 0.3 parts by mass of octadecyl-3-(3,5-di-t-butyl-4-hydroxyphenyl)propionate based on 100 parts by mass of the block copolymer were added thereto as a stabilizer to obtain a hydrogenated block copolymer (2).

The obtained hydrogenated block copolymer (2) had a total styrene content of 32.3% by mass, a styrene content of 99.2% by mass in the polystyrene block A, a vinyl bond content of 34.6% by mol before hydrogenation in the polybutadiene block, a weight-average molecular weight of 176000 as the whole polymer, and a molecular weight distribution of 1.23. The degree of hydrogenation of aliphatic double bonds derived from 1,3-butadiene was 99.2%.

### (Hydrogenated block copolymer (3))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.062 parts by mass of n-butyllithium based on 100 parts by mass of all monomers, and 0.34 mol of tetramethylethylenediamine (hereinafter, referred to as TMEDA) based on 1 mol of n-butyllithium were added thereto, followed by polymerization at 70°C for 25 minutes.

Subsequently, a cyclohexane solution containing 68 parts by mass of a 1,3-butadiene monomer was added thereto and polymerized at 70°C for 40 minutes.

Finally, a cyclohexane solution containing 16 parts by mass of a styrene monomer was added thereto and polymerized at 70°C for 25 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 70 ppm (in terms of titanium) of the hydrogenation catalyst based on 100 parts by mass of the block copolymer was added, followed by hydrogenation reaction at a hydrogen pressure of 0.8 MPa and a temperature of 85°C.

After the completion of hydrogenation reaction, 0.3 parts by mass of octadecyl-3-(3,5-di-t-butyl-4-hydroxyphenyl)propionate based on 100 parts by mass of the block copolymer were added thereto as a stabilizer to obtain a hydrogenated block copolymer (3).

The obtained hydrogenated block copolymer (3) had a total styrene content of 32.1% by mass, a styrene content of 99.1% by mass in the polystyrene block A, a vinyl bond content of 35.1% by mol before hydrogenation in the polybutadiene block, a weight-average molecular weight of 293000 as the whole polymer, and a molecular weight distribution of 1.19. The degree of hydrogenation of aliphatic double bonds derived from 1,3-butadiene was 70.8%.

### (Hydrogenated block copolymer (4))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.062 parts by mass of n-butyllithium based on 100 parts by mass of all monomers, and 0.25 mol of tetramethylethylenediamine (hereinafter, referred to as TMEDA) based on 1 mol of n-butyllithium were added thereto, followed by polymerization at 70°C for 25 minutes.

Subsequently, a cyclohexane solution containing 68 parts by mass of a 1,3-butadiene monomer was added thereto and polymerized at 70°C for 40 minutes.

Finally, a cyclohexane solution containing 16 parts by mass of a styrene monomer was added thereto and polymerized at 70°C for 25 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C.

After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (4).

The obtained hydrogenated block copolymer (4) had a total styrene content of 31.9% by mass, a styrene content of 98.9% by mass in the polystyrene block A, a vinyl bond content of 28.2% by mol before hydrogenation in the polybutadiene block, a weight-average molecular weight of 289000 as the whole polymer, and a molecular weight distribution of 1.21. The degree of hydrogenation of aliphatic double bonds derived from 1,3-butadiene was 99.3%.

### (Hydrogenated block copolymer (5))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.060 parts by mass of n-butyllithium based on 100 parts by mass of all monomers, and 0.55 mol of tetramethylethylenediamine (hereinafter, referred to as TMEDA) based on 1 mol of n-butyllithium were added thereto, followed by polymerization at 70°C for 25 minutes.

Subsequently, a cyclohexane solution containing 68 parts by mass of a 1,3-butadiene monomer was added thereto and polymerized at 70°C for 40 minutes.

Finally, a cyclohexane solution containing 16 parts by mass of a styrene monomer was added thereto and polymerized at 70°C for 25 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C.

After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (5).

The obtained hydrogenated block copolymer (5) had a total styrene content of 32.2% by mass, a styrene content of 98.8% by mass in the polystyrene block A, a vinyl bond content of 48.7% by mol before hydrogenation in the polybutadiene block, a weight-average molecular weight of 302000 as the whole polymer, and a molecular weight distribution of 1.24. The degree of hydrogenation of aliphatic double bonds derived from 1,3-butadiene was 99.4%.

### (Hydrogenated block copolymer (6))

A vessel-type reactor (internal capacity: 100 L) equipped with a stirring apparatus and a jacket was washed, dried, and purged with nitrogen to perform batch polymerization.

First, the reactor was charged with a cyclohexane solution containing 20 parts by mass of a styrene monomer. Then, 0.080 parts by mass of n-butyllithium based on 100 parts by mass of all monomers, and 1.2 mol of TMEDA based on 1 mol of n-butyllithium were added thereto, followed by polymerization at 70°C for 25 minutes.

Subsequently, a cyclohexane solution containing 80 parts by mass of a 1,3-butadiene monomer was added thereto and polymerized at 70°C for 40 minutes.

After the completion of polymerization reaction, 0.24 mol (in terms of a molar ratio of Si to Li (Si/Li)) of tetramethoxysilane (hereinafter, also referred to as "TMS") was added thereto and stirred for 20 minutes. Then, 0.1 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (6).

The obtained hydrogenated block copolymer (6) had a total styrene content of 20.3% by mass, a styrene content of 98.5% by mass in the polystyrene block A, a vinyl bond content of 58.6% by mol before hydrogenation in the polybutadiene block, a weight-average molecular weight of 453000 as the whole polymer, and a molecular weight distribution of 1.28. The degree of hydrogenation of aliphatic double bonds derived from 1,3-butadiene was 99.3%.

### (Hydrogenated block copolymer (7))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.109 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 18 parts by mass of a styrene monomer was added thereto and polymerized at 70°C for 25 minutes. Further, a cyclohexane solution containing 59 parts by mass of a 1,3-butadiene monomer was added thereto and polymerized at 60°C for 1 hour.

Finally, a cyclohexane solution containing 18 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (7).

The obtained hydrogenated block copolymer (7) had a total styrene content of 36.2% by mass, a styrene content of 99.1% by mass in the polystyrene block A, a vinyl bond content of 76.2% by mol before hydrogenation in the polybutadiene block, a weight-average molecular weight of 137000 as the whole polymer, and a molecular weight distribution of 1.18. The degree of hydrogenation of aliphatic double bonds derived from 1,3-butadiene was 99.4%.

### (Hydrogenated block copolymer (8))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 22 parts by mass of a styrene monomer was added thereto and polymerized at 70°C for 25 minutes. Further, a cyclohexane solution containing 52 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (8).

The obtained hydrogenated block copolymer (8) had a total styrene content of 43.2% by mass, a styrene content of 99.2% by mass in the polystyrene block A, a vinyl bond content of 77.8% by mol before hydrogenation in the polybutadiene block, a weight-average molecular weight of 108000 as the whole polymer, and a molecular weight distribution of 1.19. The degree of hydrogenation of aliphatic double bonds derived from 1,3-butadiene was 99.5%.

### (Hydrogenated block copolymer (9))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, 1.4 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 22 parts by mass of a styrene monomer was added thereto and polymerized at 70°C for 25 minutes. Further, a cyclohexane solution containing 52 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained polymer, 70 ppm (in terms of titanium) of the hydrogenation catalyst based on 100 parts by mass of the polymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (9).

The obtained hydrogenated block copolymer (9) had a total styrene content of 42.6% by mass, a styrene content of 98.9% by mass in the polystyrene block A, a vinyl bond content of 73.2% by mol before hydrogenation in the polybutadiene block, a weight-average molecular weight of 113000 as the whole polymer, and a molecular weight distribution of 1.20. The degree of hydrogenation of aliphatic double bonds derived from 1,3-butadiene was 75.7%.

### (Hydrogenated block copolymer (10))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.25 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 28 parts by mass of a styrene monomer was added thereto and polymerized at 70°C for 30 minutes. Further, a cyclohexane solution containing 40 parts by mass of a 1,3-butadiene monomer was added thereto and polymerized at 60°C for 1 hour.

Finally, a cyclohexane solution containing 27 parts by mass of a styrene monomer was added thereto and polymerized at 70°C for 30 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (10).

The obtained hydrogenated block copolymer (10) had a total styrene content of 54.7% by mass, a styrene content of 99.4% by mass in the polystyrene block A, a vinyl bond content of 77.3% by mol before hydrogenation in the polybutadiene block, a weight-average molecular weight of 41000 as the whole polymer, and a molecular weight distribution of 1.15. The degree of hydrogenation of aliphatic double bonds derived from 1,3-butadiene was 99.3%.

### (Hydrogenated block copolymer (11))

A vessel-type reactor (internal capacity: 100 L) equipped with a stirring apparatus and a jacket was washed, dried, and purged with nitrogen to perform batch polymerization.

First, the reactor was charged with a cyclohexane solution containing 22 parts by mass of a styrene monomer. Then, 0.125 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 70°C for 25 minutes.

Subsequently, a cyclohexane solution containing 57 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (11).

The obtained hydrogenated block copolymer (11) had a total styrene content of 43.1% by mass, a styrene content of 99.1% by mass in the polystyrene block A, a vinyl bond content of 76.8% by mol before hydrogenation in the polybutadiene block, a weight-average molecular weight of 103000 as the whole polymer, and a molecular weight distribution of 1.14. The degree of hydrogenation of aliphatic double bonds derived from 1,3-butadiene was 99.6%.

### (Hydrogenated block copolymer (12))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, and 0.8 mol of TMEDA based on 1 mol of n-butyllithium were added thereto, followed by polymerization at 70°C for 20 minutes.

Subsequently, a cyclohexane solution containing 22 parts by mass of a styrene monomer was added thereto and polymerized at 70°C for 25 minutes. Further, a cyclohexane solution containing 52 parts by mass of a 1,3-butadiene monomer was added thereto and polymerized at 70°C for 40 minutes.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (12).

The obtained hydrogenated block copolymer (12) had a total styrene content of 43.1% by mass, a styrene content of 99.0% by mass in the polystyrene block A, a vinyl bond content of 62.5% by mol before hydrogenation in the polybutadiene block, a weight-average molecular weight of 102000 as the whole polymer, and a molecular weight distribution of 1.13. The degree of hydrogenation of aliphatic double bonds derived from 1,3-butadiene was 99.4%.

### (Hydrogenated block copolymer (13))

A vessel-type reactor (internal capacity: 100 L) equipped with a stirring apparatus and a jacket was washed, dried, and purged with nitrogen to perform batch polymerization.

First, the reactor was charged with a cyclohexane solution containing 0.5 parts by mass of a 1,3-butadiene monomer. Then, 0.125 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 10 minutes.

Subsequently, a cyclohexane solution containing 22 parts by mass of a styrene monomer was added thereto and polymerized at 70°C for 25 minutes. Further, a cyclohexane solution containing 56.5 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (13).

The obtained hydrogenated block copolymer (13) had a total styrene content of 43.1% by mass, a styrene content of 99.5% by mass in the polystyrene block A, a vinyl bond content of 76.8% by mol before hydrogenation in the polybutadiene block, a weight-average molecular weight of 103000 as the whole polymer, and a molecular weight distribution of 1.13. The degree of hydrogenation of aliphatic double bonds derived from 1,3-butadiene was 99.1%.

### (Hydrogenated block copolymer (14))

A vessel-type reactor (internal capacity: 100 L) equipped with a stirring apparatus and a jacket was washed, dried, and purged with nitrogen to perform batch polymerization.

First, the reactor was charged with a cyclohexane solution containing 13 parts by mass of a 1,3-butadiene monomer. Then, 0.125 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 30 minutes.

Subsequently, a cyclohexane solution containing 22 parts by mass of a styrene monomer was added thereto and polymerized at 70°C for 25 minutes. Further, a cyclohexane solution containing 44 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (14).

The obtained hydrogenated block copolymer (14) had a total styrene content of 43.4% by mass, a styrene content of 99.3% by mass in the polystyrene block A, a vinyl bond content of 78.1% by mol before hydrogenation in the polybutadiene block, a weight-average molecular weight of 104000 as the whole polymer, and a molecular weight distribution of 1.15. The degree of hydrogenation of aliphatic double bonds derived from 1,3-butadiene was 99.4%.

### (Hydrogenated block copolymer (15))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, 1.9 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 22 parts by mass of a styrene monomer was added thereto and polymerized at 70°C for 25 minutes. Further, a cyclohexane solution containing 52 parts by mass of a 1,3-butadiene monomer was added thereto and polymerized at 60°C for 1 hour.

Finally, a cyclohexane solution containing 21 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (15).

The obtained hydrogenated block copolymer (15) had a total styrene content of 43.2% by mass, a styrene content of 98.9% by mass in the polystyrene block A, a vinyl bond content of 83.6% by mol before hydrogenation in the polybutadiene block, a weight-average molecular weight of 107000 as the whole polymer, and a molecular weight distribution of 1.18. The degree of hydrogenation of aliphatic double bonds derived from 1,3-butadiene was 99.2%.

### (Hydrogenated block copolymer (16))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.140 parts by mass of n-butyllithium based on 100 parts by mass of all monomers, 0.7 mol of TMEDA based on 1 mol of n-butyllithium, and 0.04 mol of sodium-t-pentoxide based on 1 mol of n-butyllithium were added thereto, followed by polymerization at 70°C for 25 minutes.

Subsequently, a cyclohexane solution containing 7 parts by mass of a 1,3-butadiene monomer was added thereto and polymerized at 70°C for 15 minutes. Further, a cyclohexane solution containing 33 parts by mass of a styrene monomer and 20 parts by mass of a 1,3-butadiene monomer was added thereto and polymerized at 70°C for 1 hour.

Subsequently, a cyclohexane solution containing 15 parts by mass of a styrene monomer was added thereto and polymerized at 70°C for 25 minutes.

Finally, a cyclohexane solution containing 9 parts by mass of a 1,3-butadiene monomer was added thereto and polymerized at 70°C for 15 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (16).

The obtained hydrogenated block copolymer (16) had a total styrene content of 64.1% by mass, a styrene content of 98.8% by mass in the polystyrene block A, a styrene content of 60.6% by mass in the polystyrene block **A', a** vinyl bond content of 65.3% by mol before hydrogenation in the polybutadiene block, a weight-average molecular weight of 94000 as the whole polymer, and a molecular weight distribution of 1.21. The degree of hydrogenation of aliphatic double bonds derived from 1,3-butadiene was 99.4%.

### (Hydrogenated block copolymer (17))

A vessel-type reactor (internal capacity: 100 L) equipped with a stirring apparatus and a jacket was washed, dried, and purged with nitrogen to perform batch polymerization.

First, the reactor was charged with a cyclohexane solution containing 16 parts by mass of a styrene monomer. Then, 0.130 parts by mass of n-butyllithium based on 100 parts by mass of all monomers, 0.7 mol of TMEDA based on 1 mol of n-butyllithium, and 0.04 mol of sodium-t-pentoxide based on 1 mol of n-butyllithium were added thereto, followed by polymerization at 70°C for 25 minutes.

Subsequently, a cyclohexane solution containing 7 parts by mass of a 1,3-butadiene monomer was added thereto and polymerized at 70°C for 15 minutes. Further, a cyclohexane solution containing 29 parts by mass of a styrene monomer and 24 parts by mass of a 1,3-butadiene monomer was added thereto and polymerized at 70°C for 1 hour.

Subsequently, a cyclohexane solution containing 15 parts by mass of a styrene monomer was added thereto and polymerized at 70°C for 25 minutes.

Finally, a cyclohexane solution containing 9 parts by mass of a 1,3-butadiene monomer was added thereto and polymerized at 70°C for 15 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (17).

The obtained hydrogenated block copolymer (17) had a total styrene content of 60.2% by mass, a styrene content of 98.6% by mass in the polystyrene block A, a styrene content of 52.1% by mass in the polystyrene block A', a vinyl bond content of 64.8% by mol before hydrogenation in the polybutadiene block, a weight-average molecular weight of 106000 as the whole polymer, and a molecular weight distribution of 1.25. The degree of hydrogenation of aliphatic double bonds derived from 1,3-butadiene was 98.6%.

### (Hydrogenated block copolymer (18))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.086 parts by mass of n-butyllithium based on 100 parts by mass of all monomers, 1.5 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 7 parts by mass of a styrene monomer was added thereto and polymerized at 70°C for 20 minutes. Further, a cyclohexane solution containing 82 parts by mass of a 1,3-butadiene monomer was added thereto and polymerized at 60°C for 1.5 hours.

Finally, a cyclohexane solution containing 6 parts by mass of a styrene monomer was added thereto and polymerized at 70°C for 20 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (18).

The obtained hydrogenated block copolymer (18) had a total styrene content of 13.4% by mass, a styrene content of 99.3% by mass in the polystyrene block A, a vinyl bond content of 76.3% by mol before hydrogenation in the polybutadiene block, a weight-average molecular weight of 183000 as the whole polymer, and a molecular weight distribution of 1.22. The degree of hydrogenation of aliphatic double bonds derived from 1,3-butadiene was 99.6%.

### (Hydrogenated block copolymer (19))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, and 0.4 mol of TMEDA based on 1 mol of n-butyllithium were added thereto, followed by polymerization at 70°C for 15 minutes.

Subsequently, a cyclohexane solution containing 22 parts by mass of a styrene monomer was added thereto and polymerized at 70°C for 25 minutes. Further, a cyclohexane solution containing 51 parts by mass of a 1,3-butadiene monomer was added thereto and polymerized at 70°C for 40 minutes.

Finally, a cyclohexane solution containing 22 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (19).

The obtained hydrogenated block copolymer (19) had a total styrene content of 44.1% by mass, a styrene content of 99.5% by mass in the polystyrene block A, a vinyl bond content of 39.6% by mol before hydrogenation in the polybutadiene block, a weight-average molecular weight of 102000 as the whole polymer, and a molecular weight distribution of 1.13. The degree of hydrogenation of aliphatic double bonds derived from 1,3-butadiene was 99.2%.

### (Hydrogenated block copolymer (20))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, 1.4 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 38 parts by mass of a styrene monomer was added thereto and polymerized at 70°C for 35 minutes. Further, a cyclohexane solution containing 19 parts by mass of a 1,3-butadiene monomer was added thereto and polymerized at 60°C for 40 minutes.

Finally, a cyclohexane solution containing 38 parts by mass of a styrene monomer was added thereto and polymerized at 70°C for 35 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (20).

The obtained hydrogenated block copolymer (20) had a total styrene content of 75.6% by mass, a styrene content of 99.3% by mass in the polystyrene block A, a vinyl bond content of 75.1% by mol before hydrogenation in the polybutadiene block, a weight-average molecular weight of 104000 as the whole polymer, and a molecular weight distribution of 1.19. The degree of hydrogenation of aliphatic double bonds derived from 1,3-butadiene was 99.5%.

### (Hydrogenated block copolymer (21))

A vessel-type reactor (internal capacity: 100 L) equipped with a stirring apparatus and a jacket was washed, dried, and purged with nitrogen to perform batch polymerization.

First, the reactor was charged with a cyclohexane solution containing 33 parts by mass of a styrene monomer. Then, 0.198 parts by mass of n-butyllithium based on 100 parts by mass of all monomers, and 0.4 mol of TMEDA based on 1 mol of n-butyllithium were added thereto, followed by polymerization at 70°C for 30 minutes.

Subsequently, a cyclohexane solution containing 34 parts by mass of a 1,3-butadiene monomer was added thereto and polymerized at 70°C for 30 minutes. Finally, a cyclohexane solution containing 33 parts by mass of a styrene monomer was added thereto and polymerized at 70°C for 30 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (21).

The obtained hydrogenated block copolymer (21) had a total styrene content of 65.7% by mass, a polystyrene block content of 98.9% by mass, a vinyl bond content of 40.6% by mol before hydrogenation in the polybutadiene block, a weight-average molecular weight of 57000 as the whole polymer, and a molecular weight distribution of 1.16. The degree of hydrogenation of aliphatic double bonds derived from 1,3-butadiene was 99.5%.

### (Hydrogenated block copolymer (22))

A vessel-type reactor (internal capacity: 100 L) equipped with a stirring apparatus and a jacket was washed, dried, and purged with nitrogen to perform batch polymerization.

First, the reactor was charged with a cyclohexane solution containing 10 parts by mass of a styrene monomer. Then, 0.138 parts by mass of n-butyllithium based on 100 parts by mass of all monomers, and 0.8 mol of TMEDA based on 1 mol of n-butyllithium were added thereto, followed by polymerization at 70°C for 20 minutes.

Subsequently, a cyclohexane solution containing 47 parts by mass of a styrene monomer and 34 parts by mass of a 1,3-butadiene monomer was added thereto and polymerized at 70°C for 50 minutes.

Finally, a cyclohexane solution containing 9 parts by mass of a styrene monomer was added thereto and polymerized at 70°C for 20 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (22).

The obtained hydrogenated block copolymer (22) had a total styrene content of 66.2% by mass, a styrene content of 99.1% by mass in the polystyrene block A, a styrene content of 58.2% by mass in the polystyrene block A', a weight-average molecular weight of 95000 as the whole polymer, and a molecular weight distribution of 1.22. The degree of hydrogenation of aliphatic double bonds derived from 1,3-butadiene was 99.0%.

### (Hydrogenated block copolymer (23))

The hydrogenated block copolymer (8) was desolvated, dried, and pelletized in a single-screw extruder. Then, 2.1 parts by mass of maleic anhydride and 0.12 parts by mass of 2,5-dimethyl-2,5-di(t-butylperoxy)hexane based on 100 parts by mass of the hydrogenated block copolymer (8) were added thereto, followed by addition reaction at a set temperature of 200°C in a twin-screw extruder to obtain a hydrogenated block copolymer (23).

The amount of an acid anhydride group added to the obtained hydrogenated block copolymer (23) through maleic anhydride was 1.8% by mass.

### (Hydrogenated block copolymer (24))

The hydrogenated block copolymer (18) was desolvated, dried, and pelletized in a single-screw extruder. Then, 2.1 parts by mass of maleic anhydride and 0.12 parts by mass of 2,5-dimethyl-2,5-di(t-butylperoxy)hexane based on 100 parts by mass of the hydrogenated block copolymer (18) were added thereto, followed by addition reaction at a set temperature of 200°C in a twin-screw extruder to obtain a hydrogenated block copolymer (24).

The amount of an acid anhydride group added to the obtained hydrogenated block copolymer (24) through maleic anhydride was 1.5% by mass.

### (Hydrogenated block copolymer (25))

The hydrogenated block copolymer (22) was desolvated, dried, and pelletized in a single-screw extruder. Then, 2.1 parts by mass of maleic anhydride and 0.12 parts by mass of 2,5-dimethyl-2,5-di(t-butylperoxy)hexane based on 100 parts by mass of the hydrogenated block copolymer (22) were added thereto, followed by addition reaction at a set temperature of 200°C in a twin-screw extruder to obtain a hydrogenated block copolymer (25).

The amount of an acid anhydride group added to the obtained hydrogenated block copolymer (25) through maleic anhydride was 1.1% by mass.

### (Hydrogenated block copolymer (26))

A vessel-type reactor (internal capacity: 100 L) equipped with a stirring apparatus and a jacket was washed, dried, and purged with nitrogen to perform batch polymerization.

First, the reactor was charged with a cyclohexane solution containing 11 parts by mass of a styrene monomer. Then, 0.10 parts by mass of n-butyllithium based on 100 parts by mass of all monomers, 0.8 mol of TMEDA based on 1 mol of n-butyllithium, and 0.04 mol of sodium-t-pentoxide based on 1 mol of n-butyllithium were added thereto, followed by polymerization at 70°C for 25 minutes.

Subsequently, a cyclohexane solution containing 10 parts by mass of a 1,3-butadiene monomer was added thereto and polymerized at 70°C for 15 minutes. Further, a cyclohexane solution containing 46 parts by mass of a styrene monomer and 19 parts by mass of a 1,3-butadiene monomer was added thereto and polymerized at 70°C for 1 hour.

Subsequently, a cyclohexane solution containing 9 parts by mass of a styrene monomer was added thereto and polymerized at 70°C for 25 minutes.

Finally, a cyclohexane solution containing 5 parts by mass of a 1,3-butadiene monomer was added thereto and polymerized at 70°C for 15 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (26).

The obtained hydrogenated block copolymer (26) had a total styrene content of 66.4% by mass, a styrene content of 99.4% by mass in the polystyrene block A, a styrene content of 69.2% by mass in the polystyrene block A', a vinyl bond content of 65.8% by mol before hydrogenation in the polybutadiene block, a weight-average molecular weight of 136000 as the whole polymer, and a molecular weight distribution of 1.19. The degree of hydrogenation of aliphatic double bonds derived from 1,3-butadiene was 99.3%.

### (Hydrogenated block copolymer (27))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.215 parts by mass of n-butyllithium based on 100 parts by mass of all monomers, 1.6 mol of TMEDA based on 1 mol of n-butyllithium, and 0.04 mol of sodium-t-pentoxide based on 1 mol of n-butyllithium were added thereto, followed by polymerization at 60°C for 20 minutes.

Subsequently, a cyclohexane solution containing 19 parts by mass of a styrene monomer was added thereto and polymerized at 70°C for 25 minutes. Further, a cyclohexane solution containing 57 parts by mass of a 1,3-butadiene monomer was added thereto and polymerized at 60°C for 1 hour.

Finally, a cyclohexane solution containing 19 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (27).

The obtained hydrogenated block copolymer (27) had a total styrene content of 37.6% by mass, a styrene content of 99.1% by mass in the polystyrene block A, a vinyl bond content of 77.5% by mol before hydrogenation in the polybutadiene block, a weight-average molecular weight of 54000 as the whole polymer, and a molecular weight distribution of 1.16. The degree of hydrogenation of aliphatic double bonds derived from 1,3-butadiene was 99.5%.

### (Hydrogenated block copolymer (28))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.078 parts by mass of n-butyllithium based on 100 parts by mass of all monomers, and 0.4 mol of TMEDA based on 1 mol of n-butyllithium were added thereto, followed by polymerization at 70°C for 15 minutes.

Subsequently, a cyclohexane solution containing 34 parts by mass of a styrene monomer was added thereto and polymerized at 70°C for 30 minutes.

Subsequently, a cyclohexane solution containing 28 parts by mass of a 1,3-butadiene monomer was added thereto and polymerized at 70°C for 30 minutes. Finally, a cyclohexane solution containing 33 parts by mass of a styrene monomer was added thereto and polymerized at 70°C for 30 minutes.

After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (28).

The obtained hydrogenated block copolymer (28) had a total styrene content of 66.7% by mass, a polystyrene block content of 99.3% by mass, a vinyl bond content of 40.3% by mol before hydrogenation in the polybutadiene block, a weight-average molecular weight of 195000 as the whole polymer, and a molecular weight distribution of 1.14. The degree of hydrogenation of aliphatic double bonds derived from 1,3-butadiene was 99.2%.

### (Hydrogenated block copolymer (29))

A vessel-type reactor (internal capacity: 100 L) equipped with a stirring apparatus and a jacket was washed, dried, and purged with nitrogen to perform batch polymerization.

First, the reactor was charged with a cyclohexane solution containing 5 parts by mass of a 1,3-butadiene monomer. Then, 0.125 parts by mass of n-butyllithium based on 100 parts by mass of all monomers, and 0.4 mol of TMEDA based on 1 mol of n-butyllithium were added thereto, followed by polymerization at 70°C for 15 minutes.

Subsequently, a cyclohexane solution containing 15 parts by mass of a styrene monomer was added thereto and polymerized at 70°C for 25 minutes. Further, a cyclohexane solution containing 65 parts by mass of a 1,3-butadiene monomer was added thereto and polymerized at 70°C for 40 minutes.

Finally, a cyclohexane solution containing 15 parts by mass of a styrene monomer was added thereto and polymerized at 70°C for 25 minutes. After the completion of polymerization reaction, 0.95 mol of methanol based on 1 mol of n-butyllithium was added thereto for the deactivation of the reaction catalyst to obtain a block copolymer.

Next, to the obtained block copolymer, 100 ppm (in terms of titanium) of the hydrogenation catalyst based on 100 parts by mass of the block copolymer was added, followed by hydrogenation reaction at a hydrogen pressure of 0.8 MPa and a temperature of 85°C. After the completion of hydrogenation reaction, 0.3 parts by mass of octadecyl-3-(3,5-di-t-butyl-4-hydroxyphenyl)propionate based on 100 parts by mass of the polymer were added thereto as a stabilizer to obtain a hydrogenated block copolymer (29).

The obtained hydrogenated block copolymer (29) had a total styrene content of 30.3% by mass, a styrene content of 99.5% by mass in the polystyrene block A, a vinyl bond content of 41.2% by mol before hydrogenation in the polybutadiene block, a weight-average molecular weight of 103000 as the whole polymer, and a molecular weight distribution of 1.16. The degree of hydrogenation of aliphatic double bonds derived from 1,3-butadiene was 99.5%.

### (Polypropylene resin (b))

The following commercially available product was used as the polypropylene resin (b).

Polypropylene resin (b): SunAllomer Ltd., PM801A, propylene homononamer, MFR (230°C, 2.16 kg): 13 g/10 min

### (Non-aromatic softener (c))

The following commercially available products were used as the non-aromatic softener (c).

Non-aromatic softener (c): Diana Process Oil PW90 manufactured by Idemitsu Kosan Co., Ltd., paraffin oil, weight-average molecular weight: 530, kinematic viscosity (40°C) = 90.5 mm²/sec

### [Component used in double layer molded article]

### (Polar group-containing thermoplastic resin)

PC molded plate: PC1600 from C.I. TAKIRON Corp., 95 mm × 145 mm × 2 mm (thickness) flat plate
ABS molded plate: EAR003 from Sumitomo Bakelite Co., Ltd., 95 mm × 145 mm × 2 mm (thickness) flat plate
PC/ABS molded plate: ROA EFN800-04 from Sumitomo Bakelite Co., Ltd., 95 mm × 145 mm × 2 mm (thickness) flat plate
PMMA molded plate: ACRYLITE L-100 from Mitsubishi Chemical Corp., 95 mm × 145 mm × 2 mm (thickness) flat plate
PET molded plate: PET-6010 from C.I. TAKIRON Corp., 95 mm × 145 mm × 2 mm (thickness) flat plate

Tables 1 to 3 below show the types, forms, and physical properties of the hydrogenated block copolymers (1) to (29).

In the tables, A or A' represents a polymer block composed mainly of a vinyl aromatic monomer unit, B represents a polymer block composed mainly of a conjugated diene monomer unit, and X represents a coupling agent residue.

**[Table 1]**

| Hydrogenated block copolymer No. Production Example No. | (1) | (2) | (3) | (4) | (5) | (6) |
|---|---|---|---|---|---|---|
| Type | (a-1) | (a-1) | (a-1) | (a-1) | (a-1) | (a-1) |
| Form | A-B-A | A-B-A | A-B-A | A-B-A | A-B-A | (A-B)n-X |
| Total styrene content (% by mass) | 31.8 | 32.3 | 32.1 | 31.9 | 32.2 | 20.3 |
| Styrene content in polystyrene block A (% by mass) | 98.7 | 99.2 | 99.1 | 98.9 | 98.8 | 98.5 |
| Styrene content in polystyrene block A' (% by mass) | - | - | - | - | - | - |
| Content of terminal polybutadiene block (% by mass) | - | - | - | - | - | - |
| Vinyl bond content in polybutadiene block (% by mol) | 35.5 | 34.6 | 35.1 | 28.2 | 48.7 | 58.6 |
| Weight-average molecular weight (×10000) of hydrogenated block copolymer | 29.6 | 17.6 | 29.3 | 28.9 | 30.2 | 45.3 |
| Peak molecular weight (×10000) of hydrogenated block copolymer | 28.3 | 16.7 | 28.5 | 28.1 | 29.6 | 58.3/19.6 |
| Molecular weight distribution (Mw/Mn) of hydrogenated block copolymer | 1.21 | 1.23 | 1.19 | 1.21 | 1.24 | 1.28 |
| Degree of hydrogenation (% by mol) | 99.5 | 99.2 | 70.8 | 99.3 | 99.4 | 99.3 |
| Amount of acid anhydride group added (% by mass) | - | - | - | - | - | - |

**[Table 2]**

| Hydrogenated block copolymer No. Production Example No. | (7) | (8) | (9) | (10) | (11) | (12) | (13) | (14) | (15) | (16) | (17) |
|---|---|---|---|---|---|---|---|---|---|---|---|
| Type | (a-2) | (a-2) | (a-2) | (a-2) | (a-2) | (a-2) | (a-2) | (a-2) | (a-2) | (a-2) | (a-2) |
| Form | A-B-A-B | A-B-A-B | A-B-A-B | A-B-A-B | A-B-A | A-B-A-B | A-B-A-B | A-B-A-B | A-B-A-B | A-B-A'-A-B | A-B-A'-A-B |
| Total styrene content (% by mass) | 36.2 | 43.2 | 42.6 | 54.7 | 43.1 | 43.1 | 43.1 | 43.4 | 43.2 | 64.1 | 60.2 |
| Styrene content in polystyrene block A (% by mass) | 99.1 | 99.2 | 98.9 | 99.4 | 99.1 | 99 | 99.5 | 99.3 | 98.9 | 98.8 | 98.6 |
| Styrene content in polystyrene block A' (% by mass) | - | - | - | - | - | - | - | - | - | 60.6 | 52.1 |
| Content of terminal polybutadiene block (% by mass) | 5 | 5 | 5 | 5 | 0 | 5 | 0.5 | 13 | 5 | 9 | 9 |
| Vinyl bond content in polybutadiene block (% by mol) | 76.2 | 77.8 | 73.2 | 77.3 | 76.8 | 62.5 | 76.8 | 78.1 | 83.6 | 65.3 | 64.8 |
| Weight-average molecular weight (×10000) of hydrogenated block copolymer | 13.7 | 10.8 | 11.3 | 4.1 | 10.3 | 10.2 | 10.3 | 10.4 | 10.7 | 9.4 | 10.6 |
| Peak molecular weight (×10000) of hydrogenated block copolymer | 13.1 | 10.2 | 10.6 | 3.8 | 9.7 | 9.5 | 9.6 | 9.9 | 10.3 | 9.3 | 10.5 |
| Molecular weight distribution (Mw/Mn) of hydrogenated block copolymer | 1.18 | 1.19 | 1.2 | 1.15 | 1.14 | 1.13 | 1.13 | 1.15 | 1.18 | 1.21 | 1.25 |
| Degree of hydrogenation (% by mol) | 99.4 | 99.5 | 75.7 | 99.3 | 99.6 | 99.4 | 99.1 | 99.4 | 99.2 | 99.4 | 98.6 |
| Amount of acid anhydride group added (% by mass) | - | - | - | - | - | - | - | - | - | - | - |

**[Table 3]**

| Hydrogenated block copolymer No. Production Example No. | (18) | (19) | (20) | (21) | (22) | (23) | (24) | (25) | (26) | (27) | (28) | (29) |
|---|---|---|---|---|---|---|---|---|---|---|---|---|
| Type | (a-2) | (a-2) | (a-2) | (a-2) | (a-2) | (a-2) | (a-2) | (a-2) | (a-2) | (a-2) | (a-2) | (a-2) |
| Form | A-B-A-B | A-B-A-B | A-B-A-B | A-B-A | A-A'-A | A-B-A-B | A-B-A-B | A-A'-A | A-B-A'-A-B | A-B-A-B | A-B-A-B | A-B-A-B |
| Total styrene content (% by mass) | 13.4 | 44.1 | 75.6 | 65.7 | 66.2 | 43.2 | 13.4 | 66.2 | 66.4 | 37.6 | 66.7 | 30.3 |
| Styrene content in polystyrene block A (% by mass) | 99.3 | 99.5 | 99.3 | 98.9 | 99.1 | 99.2 | 99.3 | 99.1 | 99.4 | 99.1 | 99.3 | 99.5 |
| Styrene content in polystyrene block A' (% by mass) | - | - | - | - | 58.2 | - | - | 58.2 | 69.2 | - | - | - |
| Content of terminal polybutadiene block (% by mass) | 5 | 5 | 5 | 0 | 0 | 5 | 5 | 0 | 5 | 5 | 5 | 5 |
| Vinyl bond content in polybutadiene block (% by mol) | 76.3 | 39.6 | 75.1 | 40.6 | - | 77.8 | 76.3 | - | 65.8 | 77.5 | 40.3 | 41.2 |
| Weight-average molecular weight (×10000) of hydrogenated block copolymer | 18.3 | 10.2 | 10.4 | 5.7 | 9.5 | 10.8 | 18.3 | 9.5 | 13.6 | 5.4 | 19.5 | 10.3 |
| Peak molecular weight (×10000) of hydrogenated block copolymer | 18.0 | 9.5 | 10.2 | 5.2 | 9.4 | 10.6 | 17.7 | 9.1 | 13.3 | 4.8 | 18.8 | 9.9 |
| Molecular weight distribution (Mw/Mn) of hydrogenated block copolymer | 1.22 | 1.13 | 1.19 | 1.16 | 1.22 | 1.19 | 1.22 | 1.22 | 1.19 | 1.16 | 1.14 | 1.16 |
| Degree of hydrogenation (% by mol) | 99.6 | 99.2 | 99.5 | 99.5 | 99 | 99.5 | 99.6 | 99 | 99.3 | 99.5 | 99.2 | 99.5 |
| Amount of acid anhydride group added (% by mass) | - | - | - | - | - | 1.8 | 1.5 | 1.1 | - | - | - | - |

Tables 4 to 7 below show the blending ratios and characteristics of the thermoplastic elastomer compositions of Examples 1 to 25 and Comparative Examples 1 to 15.

In the tables below, the numbers of Examples and Comparative Examples may not be consistent with the order of description.

**[Table 4]**

| | | | Example 1 | Example 24 | Example 2 | Example 3 | Example 4 | Example 5 | Example 6 | Example 7 | Example 8 | Example 9 | Example 10 | Example 25 | Example 11 |
|---|---|---|---|---|---|---|---|---|---|---|---|---|---|---|---|
| (I) Component | (a-1) Component | Production Example No. | (1) | (1) | (1) | (1) | (1) | (1) | (1) | (1) | (1) | (1) | (1) | (1) | (1) |
| | | Content (parts by mass) | 100 | 100 | 100 | 100 | 100 | 100 | 100 | 100 | 100 | 100 | 100 | 100 | 100 |
| | (b) Component | Content (parts by mass) | 50 | 50 | 50 | 50 | 50 | 50 | 50 | 50 | 50 | 50 | 50 | 50 | 50 |
| | (c) Component | Content (parts by mass) | 150 | 150 | 150 | 150 | 150 | 150 | 150 | 150 | 150 | 150 | 150 | 150 | 150 |
| | (a-2) Component | Production Example No. | (7) | (27) | (8) | (9) | (10) | (11) | (12) | (13) | (14) | (15) | (16) | (26) | (17) |
| | | Content (parts by mass) | 200 | 200 | 200 | 200 | 200 | 200 | 200 | 200 | 200 | 200 | 200 | 200 | 200 |
| MFR (230°C, 2.16 kg) [g/10 min] | | | 17 | 35 | 20 | 31 | 27 | 13 | 17 | 15 | 13 | 22 | 200 | 140 | 220 |
| Hardness [-] | | | 63 | 61 | 67 | 63 | 72 | 74 | 69 | 72 | 65 | 65 | 61 | 64 | 56 |
| Tensile stress M300 [MPa] | | | 3.5 | 3.3 | 3.9 | 3.5 | 4.3 | 4.4 | 4.1 | 4.2 | 4 | 3.7 | 3.8 | 4.1 | 3.4 |
| Tensile breaking strength Tb [MPa] | | | 4.9 | 4.1 | 5.3 | 5 | 5.7 | 5.8 | 5.5 | 5.6 | 4.8 | 5.1 | 8.1 | 8.8 | 8.4 |
| Tensile breaking elongation Eb [%] | | | 640 | 620 | 580 | 600 | 530 | 540 | 570 | 550 | 590 | 600 | 570 | 530 | 610 |
| Dunlop rebound resilience [%] | | | 51.3 | 52.2 | 44.1 | 47.3 | 41.6 | 46.8 | 45.6 | 46.2 | 43.1 | 43.3 | 37 | 33 | 39.2 |
| Compression set at 40°C [%] | | | 50 | 59 | 56 | 51 | 62 | 51 | 53 | 53 | 58 | 58 | 69 | 66 | 65 |
| Thermal fusion bonding strength [N/cm] | | PC | 41.2 | 42.8 | 44.1 | 40.1 | 46.8 | 39.6 | 43.2 | 40.6 | 42.6 | 44.8 | 41.4 | 41.8 | 39.7 |
| | | ABS | 10.6 | 11 | 11.5 | 10.8 | 12.3 | 10.4 | 11 | 10.8 | 11 | 11.8 | 10.9 | 11.2 | 10.4 |
| | | PC/ABS | 29.6 | 31.1 | 31.7 | 28.3 | 33.8 | 28.2 | 31.1 | 30.1 | 30.6 | 32.4 | 29.4 | 30.1 | 28.1 |
| | | PMMA | 36.2 | 37.1 | 37.7 | 35.5 | 40.1 | 33.9 | 37.4 | 36 | 37.5 | 39.1 | 36.8 | 37 | 34.1 |
| | | PET | 28.3 | 28.7 | 29.2 | 27.7 | 31.3 | 26.8 | 28.9 | 28.1 | 28.4 | 30.7 | 28 | 28.6 | 27.3 |
| Odor intensity index | | | 2.5 | 2.5 | 2.4 | 2.7 | 2.4 | 2.3 | 2.1 | 2.4 | 2.3 | 2.5 | 2.3 | 2.3 | 2.2 |
| Color difference b* value | | | 8.6 | 8.4 | 8.5 | 8.8 | 8.3 | 8.4 | 8.5 | 8.4 | 8.5 | 8.6 | 8.8 | 8.9 | 8.7 |
| Transparency of 2 mmt press sheet | | | Transparent | Transparent | Transparent | Transparent | Transparent | Transparent | Transparent | Transparent | Transparent | Transparent | Not transparent | Not transparent | Not transparent |

**[Table 5]**

| | | | Example 12 | Example 13 | Example 14 | Example 15 | Example 16 | Example 17 |
|---|---|---|---|---|---|---|---|---|
| (I) Component | (a-1) Component | Production Example No. | (2) | (3) | (4) | (5) | (6) | (6) |
| | | Content (parts by mass) | 100 | 100 | 100 | 100 | 100 | 100 |
| | (b) Component | Content (parts by mass) | 50 | 50 | 50 | 50 | 50 | 50 |
| | (c) Component | Content (parts by mass) | 150 | 150 | 150 | 150 | 150 | 150 |
| | (a-2) Component | Production Example No. | (8) | (8) | (8) | (8) | (8) | (16) |
| | | Content (parts by mass) | 200 | 200 | 200 | 200 | 200 | 200 |
| MFR (230°C, 2.16 kg) [g/10 min] | | | 58 | 41 | 18 | 33 | 28 | 220 |
| Hardness [-] | | | 63 | 62 | 69 | 65 | 59 | 54 |
| Tensile stress M300 [MPa] | | | 3.4 | 3.4 | 4.1 | 3.6 | 3.3 | 3.1 |
| Tensile breaking strength Tb [MPa] | | | 4.9 | 5.1 | 5.6 | 5 | 4.2 | 6.9 |
| Tensile breaking elongation Eb [%] | | | 550 | 610 | 560 | 610 | 680 | 650 |
| Dunlop rebound resilience [%] | | | 45.3 | 46.2 | 43.1 | 45.6 | 38.9 | 33.2 |
| Compression set at 40°C [%] | | | 67 | 54 | 57 | 54 | 48 | 62 |
| Thermal fusion bonding strength [N/cm] | | PC | 44.9 | 42.2 | 41.3 | 44.9 | 45.6 | 42.6 |
| | | ABS | 12.1 | 10.7 | 10.5 | 11.9 | 12.1 | 11.2 |
| | | PC/ABS | 32.9 | 30.2 | 29.4 | 32.4 | 33.1 | 30.8 |
| | | PMMA | 40.1 | 37.3 | 36.4 | 39.7 | 40 | 37.9 |
| | | PET | 31.3 | 28.4 | 28.5 | 30.4 | 31.4 | 28.7 |
| Odor intensity index | | | 2.2 | 2.6 | 2.3 | 2.5 | 2.5 | 2.4 |
| Color difference b* value | | | 8.4 | 8.7 | 8.3 | 8.6 | 8.6 | 8.9 |
| Transparency of 2 mmt press sheet | | | Transparent | Transparent | Transparent | Transparent | Transparent | Not transparent |

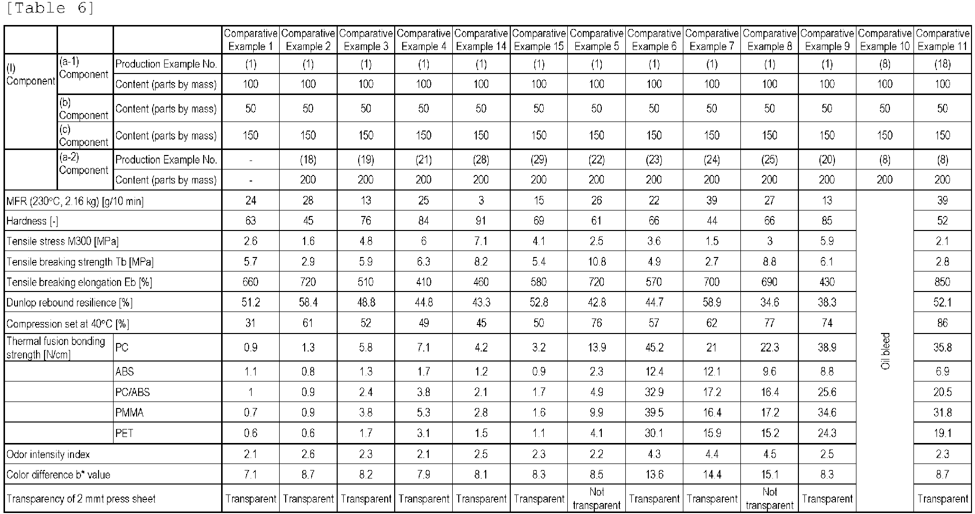

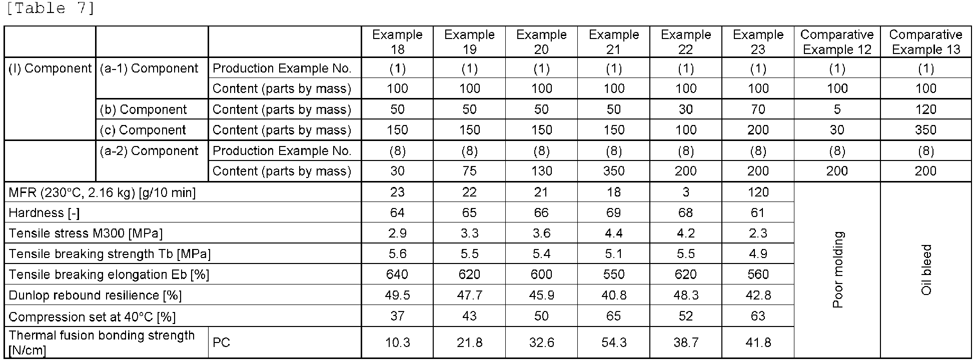

The present application is based on Japanese Patent Application No. 2022-081255 filed with the Japan Patent Office on May 18, 2022, the contents of which are incorporated herein by reference.

### Industrial Applicability

The thermoplastic elastomer composition and the double layer molded article of the present invention have no odor or color problems, for example, and are excellent in moldability and thermal bonding strength, and as such, have industrial applicability as skin materials for polar resins or various sealing materials.

## Claims

1. A thermoplastic elastomer composition for double layer molding which is to be thermal fusion-bonded by injection molding, the thermoplastic elastomer composition for double layer molding comprising
100 parts by mass of a hydrogenated block copolymer (a-1),
10 to 100 parts by mass of a polypropylene resin (b), and
50 to 300 parts by mass of a non-aromatic softener (c), and
further comprising a hydrogenated block copolymer (a-2), both the hydrogenated block copolymer (a-1) and the hydrogenated block copolymer (a-2) being non-modified hydrogenated block copolymers, wherein
a content of the hydrogenated block copolymer (a-2) is 5 to 70% by mass based on the total amount of the components (a-1), (a-2), (b), and (c),
the hydrogenated block copolymer (a-1) satisfies the following requirements (1-1) to (1-4), and
the hydrogenated block copolymer (a-2) satisfies the following requirements (2-1) to (2-6):
(1-1): one or more polymer blocks A1 composed mainly of a vinyl aromatic monomer unit, and one or more polymer blocks B1 composed mainly of a conjugated diene monomer unit are contained,
(1-2): a content of all vinyl aromatic monomer units is 15% by mass or more and less than 35% by mass,
(1-3): a weight-average molecular weight is 150,000 to 550,000, and
(1-4): 50% by mol or more of double bonds in the conjugated diene monomer unit are hydrogenated,
(2-1): one or more polymer blocks A2 composed mainly of a vinyl aromatic monomer unit, and one or more polymer blocks B2 composed mainly of a conjugated diene monomer unit are contained,
(2-2): a content of the vinyl aromatic monomer unit in the polymer block A2 is 50% by mass or more,
(2-3): a content of all vinyl aromatic monomer units is 35% by mass to 70% by mass,
(2-4): a weight-average molecular weight is 30,000 or larger and smaller than 150,000,
(2-5): a vinyl bond content before hydrogenation in the conjugated diene monomer unit in the polymer block B2 is 60% by mol to 95% by mol, and
(2-6): 50% by mol or more of double bonds in the conjugated diene monomer unit are hydrogenated.

2. The thermoplastic elastomer composition for double layer molding according to claim 1, wherein
the hydrogenated block copolymer (a-2) has at least two polymer blocks A2 composed mainly of a vinyl aromatic monomer unit, and at least two polymer blocks B2 composed mainly of a conjugated diene monomer unit,
at least one of the polymer blocks B2 is positioned at the end of the hydrogenated block copolymer (a-2), a content of the polymer block B2 positioned at the end is 1 to 10% by mass in the hydrogenated block copolymer (a-2), and
the hydrogenated block copolymer (a-2) has no peak of a weight-average molecular weight of 250,000 or larger.

3. The thermoplastic elastomer composition for double layer molding according to claim 2, wherein
a content of the vinyl aromatic monomer unit in the polymer block A2 of the hydrogenated block copolymer (a-2) is 90% by mass or more.

4. The thermoplastic elastomer composition for double layer molding according to claim 2 or 3, wherein
a content of all vinyl aromatic monomer units in the hydrogenated block copolymer (a-2) is more than 40% by mass and 70% by mass or less.

5. The thermoplastic elastomer composition for double layer molding according to claim 2 or 3, wherein
in the hydrogenated block copolymer (a-1), a vinyl bond content before hydrogenation in the conjugated diene monomer unit is 30% by mol to 50% by mol.

6. A double layer molded article having
a layer of a thermoplastic elastomer composition for double layer molding according to claim 1 or 2, and
a polar group-containing thermoplastic resin layer.

7. A double layer molded article having
a polar group-containing thermoplastic resin layer, and
a thermoplastic elastomer composition layer comprising a hydrogenated block copolymer (a), a polypropylene resin (b), and a non-aromatic softener (c), wherein
the thermoplastic elastomer composition layer is disposed in contact with the polar group-containing thermoplastic resin layer,
the hydrogenated block copolymer (a) contains no modifying group,
the hydrogenated block copolymer (a)
is a hydrogenated block copolymer which is a hydrogenated product of a block copolymer having a vinyl aromatic monomer unit and a conjugated diene monomer unit, and
has one or more molecular weight peaks each from 30,000 to smaller than 150,000 and from 150,000 to 550,000 in GPC,
a content of all vinyl aromatic monomer units in a hydrogenated block copolymer having the molecular weight peaks from 30,000 to smaller than 150,000 in GPC is 35% by mass to 70% by mass, and a vinyl bond content before hydrogenation in the conjugated diene monomer unit is 60% by mol to 95% by mol,
a content of all vinyl aromatic monomer units in a hydrogenated block copolymer having the molecular weight peaks from 150,000 to 550,000 in GPC is 15% by mass to less than 35% by mass, and
a degree of hydrogenation of double bonds in the conjugated diene monomer unit is 50% by mol or more.

8. The double layer molded article according to claim 7, wherein
the hydrogenated block copolymer (a) consists of a hydrogenated block copolymer (a-1) and a hydrogenated block copolymer (a-2),
the component (a-1) satisfies the following requirements (1-1) to (1-4),
the component (a-2) satisfies the following requirements (2-1) to (2-6),
the thermoplastic elastomer composition layer contains 100 parts by mass of the component (a-1), 10 to 100 parts by mass of the component (b), and 50 to 300 parts by mass of the component (c), and
a content of the component (a-2) in the thermoplastic elastomer composition layer is 5 to 70% by mass based on the total amount of the components (a-1), (a-2), (b), and (c):
(1-1): one or more polymer blocks A1 composed mainly of a vinyl aromatic monomer unit, and one or more polymer blocks B1 composed mainly of a conjugated diene monomer unit are contained,
(1-2): a content of all vinyl aromatic monomer units is 15% by mass or more and less than 35% by mass,
(1-3): a weight-average molecular weight is 150,000 to 550,000, and
(1-4): 50% by mol or more of double bonds in the conjugated diene monomer unit are hydrogenated,
(2-1): one or more polymer blocks A2 composed mainly of a vinyl aromatic monomer unit, and one or more polymer blocks B2 composed mainly of a conjugated diene monomer unit are contained,
(2-2): a content of the vinyl aromatic monomer unit in the polymer block A2 is 50% by mass or more,
(2-3): a content of all vinyl aromatic monomer units is 35% by mass to 70% by mass,
(2-4): a weight-average molecular weight is 30,000 or larger and smaller than 150,000,
(2-5): a vinyl bond content before hydrogenation in the conjugated diene monomer unit in the polymer block B2 is 60% by mol to 95% by mol, and
(2-6): 50% by mol or more of double bonds in the conjugated diene monomer unit are hydrogenated.

9. The double layer molded article according to claim 8, wherein
the hydrogenated block copolymer (a-2) has at least two polymer blocks A2 composed mainly of a vinyl aromatic monomer unit, and at least two polymer blocks B2 composed mainly of a conjugated diene monomer unit, at least one of the polymer blocks B2 is positioned at the end of the hydrogenated block copolymer (a-2), a content of the polymer block B2 positioned at the end is 1 to 10% by mass in the hydrogenated block copolymer (a-2),
a content of all vinyl aromatic monomer units is more than 40% by mass and 70% by mass or less, and
the hydrogenated block copolymer (a-2) has no peak of a weight-average molecular weight of 250,000 or larger.

10. The double layer molded article according to claim 8 or 9, wherein
a content of the vinyl aromatic monomer unit in the polymer block A2 of the hydrogenated block copolymer (a-2) is 90% by mass or more.

11. The double layer molded article according to claim 7, wherein
the polar group-containing thermoplastic resin is at least one member selected from the group consisting of a polycarbonate resin, an ABS resin, a polyester resin, an acrylic resin, and a mixture thereof.

12. The double layer molded article according to claim 8, wherein
in the hydrogenated block copolymer (a-1),
a vinyl bond content before hydrogenation in the conjugated diene monomer unit is 30% by mol to 50% by mol.

13. A thermoplastic elastomer composition for use in a double layer molded article according to claim 8 or 9, wherein
the double layer molded article comprises the polar group-containing thermoplastic resin layer and the thermoplastic elastomer composition layer, thermal fusion-bonded to each other by injection molding.

14. A method for producing a double layer molded article according to claim 8 or 9, comprising the steps of:
molding the polar group-containing thermoplastic resin to obtain a molded article; and
injecting a thermoplastic elastomer composition according to claim 13 to a gap part between the mold and the molded article in a state in which the molded article is placed in the mold, followed by thermal fusion bonding.
